# EUROPÄISCHE PATENTSCHRIFT

(11) **EP 2 486 097 B1**
(45) Veröffentlichungstag und Bekanntmachung des Hinweises auf die Patenterteilung: **24.07.2013**
(21) Anmeldenummer: 10759896.3
(22) Anmeldetag: 29.09.2010
(51) Int. Cl.: C08L 83/04, C08K 9/04, C08L 101/10

(54) **VERNETZBARE MASSEN**
CROSSLINKABLE COMPOSITIONS
COMPOSITIONS RETICULABLES

(30) Priorität: 08.10.2009 DE 102009045503
(43) Veröffentlichungstag der Anmeldung: 15.08.2012
(73) Patentinhaber: Wacker Chemie AG, 81737 München (DE)
(72) Erfinder: PRASSE, Marko, 01612 Glaubitz (DE)
(74) Vertreter: Budczinski, Angelika
(86) Internationale Anmeldenummer: PCT/EP2010/064458
(87) Internationale Veröffentlichungsnummer: WO 2011/042340

(56) Entgegenhaltungen:
- WO-A2-2009/120868
- JP-A- 2008 222 493
- US-A1- 2004 087 682
- US-A1- 2008 033 100

## Beschreibung

Die Erfindung betrifft vernetzbare Massen, insbesondere unter Ausschluss von Wasser lagerfähige, bei Zutritt von Wasser bei Raumtemperatur zu Elastomeren vernetzbare Massen auf der Basis von Organosiliciumverbindungen, welche speziell beschichteten basischen Füllstoff aufweisen, Verfahren zu deren Herstellung sowie daraus hergestellte Formkörper.

Unter Ausschluss von Wasser lagerfähige, bei Zutritt von Wasser bei Raumtemperatur zu Elastomeren vulkanisierende Einkomponenten-Dichtmassen, die dabei z.B. Alkohole abspalten, sind bekannt. Diese Produkte werden in großen Mengen z.B. in der Bauindustrie eingesetzt. Die Basis dieser Mischungen sind Polymere, die durch Silylgruppen terminiert sind, die reaktive Substituenten wie OH-Gruppen oder hydrolysierbare Gruppen, wie z.B. Alkoxygruppen, tragen. Üblicherweise enthalten solche Massen Calciumcarbonate.

Häufig werden mit Stearinsäure beschichtete Calciumcarbonate eingesetzt, da diese weniger Feuchtigkeit aufnehmen im Vergleich zu unbeschichteten Calciumcarbonaten. Solche Produkte werden in großer Vielfalt am Markt angeboten. Allerdings verschlechtern die beschichteten Calciumcarbonate meist die Haftung, insbesondere auf Substraten wie Beton. In JP2008222493 A2 wird die Beschichtung von Calciumcarbonaten mit polymeren Fettsäuren beschrieben, welche allerdings ebenfalls als Füllstoff in RTV1-Massen die Haftung auf Beton negativ beeinflussen.

Der Zusatz von organischen Säuren, wie n-Octansäure oder Neodecansäure, zu RTV1-Masse wurde ebenfalls vielfach beschrieben. Allerdings führt der Zusatz zu einer Erhöhung des Moduls sowie einer schlechteren Haftung auf Beton.

Gegenstand der Erfindung sind vernetzbare Massen enthaltend
(A) mindestens eine vernetzungsfähige Verbindung und
(B) mit Carbonsäuren (C) der Formel

   R⁴-(OCR³₂-C(=O)OH)_{y} (I)

   oberflächenbehandelten Calciumcarbonat haltigen Füllstoff (B0), wobei
   R³ gleich oder verschieden sein kann und Wasserstoffatom oder einen einwertigen, gegebenenfalls substituierten Kohlenwasserstoffrest darstellt,
   R⁴ einen y-wertigen, über Kohlenstoff gebundenen, gegebenenfalls substituierten Kohlenwasserstoffrest, der durch Sauerstoffatome unterbrochen sein kann, bedeutet und y eine ganze Zahl von 1 bis 3 ist.

Bei den erfindungsgemäßen Massen handelt es sich bevorzugt um durch Kondensationsreaktion vernetzbare Massen, insbesondere um unter Ausschluss von Wasser lagerfähige, bei Zutritt von Wasser bei Raumtemperatur zu Elastomeren vernetzbare Massen auf der Basis von Organosiliciumverbindungen.

Im Rahmen der vorliegenden Erfindung sollen unter der Bezeichnung "kondensationsfähige" Reste auch solche Reste verstanden werden, die einen gegebenenfalls vorangehenden Hydrolyseschritt miteinschließen.

Bei den erfindungsgemäß eingesetzten Verbindungen (A) handelt es sich um solche ausgewählt aus der Gruppe bestehend aus Verbindungen (A1) der Formel

A-[(CR¹₂)_{b}-SiRₐ(OR²)₃₋ₐ]ₓ (II),

wobei
A einen x-wertigen, über Stickstoff, Phosphor, Sauerstoff, Schwefel, Kohlenstoff oder Carbonylgruppe gebundenen Polymerrest bedeutet,
R gleich oder verschieden sein kann und einen einwertigen, gegebenenfalls substituierten Kohlenwasserstoffrest darstellt,
R¹ gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
R² gleich oder verschieden sein kann und Wasserstoffatom oder einen einwertigen, gegebenenfalls substituierten Kohlenwasserstoffrest darstellt,
x eine ganze Zahl von 1 bis 10, bevorzugt 1, 2 oder 3, besonders bevorzugt 1 oder 2, ist,
a 0, 1 oder 2, bevorzugt 0 oder 1, ist und
b eine ganze Zahl von 1 bis 10, bevorzugt 1, 2, 3 oder 4, besonders bevorzugt 1, 2 oder 3, ist,
mit der Maßgabe, dass pro Molekül mindestens zwei Gruppen OR² anwesend sind,
und
Verbindungen (A2) der Formel

R⁵_{c}Z_{d}SiO_{(4-c-d)/2} (III),

wobei
R⁵ gleich oder verschieden sein kann und gegebenenfalls substituierte Kohlenwasserstoffreste, die durch Sauerstoffatome unterbrochen sein können, bedeutet,
Z gleich oder verschieden sein kann und Hydroxylrest oder hydrolysierbare Reste bedeutet,
c 0, 1, 2 oder 3, bevorzugt 1 oder 2, ist und
d 0, 1, 2 oder 3, bevorzugt 0, 1 oder 2, besonders bevorzugt 0, ist,
mit der Maßgabe, dass die Summe aus c+d kleiner oder gleich 4 ist und pro Molekül mindestens zwei Reste Z anwesend sind.

Bevorzugt haben die Verbindungen (A1) der Formel (II) ein Molekulargewicht von 2 000 g/mol bis 100 000 g/mol, besonders bevorzugt von 5 000 g/mol bis 50 000 g/mol, jeweils angegeben als Zahlenmittel.

Bevorzugt handelt es sich bei Rest R um gegebenenfalls substituierte, einwertige Kohlenwasserstoffreste mit 1 bis 18 Kohlenstoffatomen, besonders bevorzugt um Alkylreste, den Vinyl-, den 3,3,3-Trifluorprop-1-yl- und den Phenylrest, insbesondere um den Methylrest.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluorpropyl-1-rest, der 2,2,2,2',2',2'-Hexafluorisopropylrest und der Heptafluorisopropylrest, Halogenarylreste, wie der o-, m- und p-Chlorphenylrest, und der 2-Methoxyethylrest, der 2-Methoxypropylrest sowie der 2-(2-Methoxyethoxy)ethylrest.

Beispiele für Reste R¹ sind Wasserstoffatom, die für R angegebenen Reste sowie über Stickstoff, Phosphor, Sauerstoff, Schwefel, Kohlenstoff oder Carbonylgruppe an das Kohlenstoffatom gebundene, gegebenenfalls substituierte Kohlenwasserstoffreste.

Bevorzugt handelt es sich bei Rest R¹ um Wasserstoffatom und Kohlenwasserstoffreste mit 1 bis 20 Kohlenstoffatomen, insbesondere um Wasserstoffatom.

Beispiele für Reste R² sind Wasserstoffatom sowie die für R angegebenen Reste.

Bevorzugt handelt es sich bei Rest R² um Wasserstoffatom und Kohlenwasserstoffreste mit 1 bis 6 Kohlenstoffatomen, besonders bevorzugt um Wasserstoffatom, Methylrest und Ethylrest.

Bei Rest A handelt es sich bevorzugt um organische Polymerreste, die als Polymerkette Polyoxyalkylene, wie Polyoxyethylen, Polyoxypropylen, Polyoxybutylen, Polyoxytetramethylen, Polyoxyethylen-Polyoxypropylen-Copolymer und Polyoxypropylen-Polyoxybutylen-Copolymer; Kohlenwasserstoffpolymere, wie Polyisobutylen und Copolymere von Polyisobutylen mit Isopren; Polychloroprene; Polyisoprene; Polyurethane; Polyester; Polyamide; Polyacrylate; Polymetacrylate; vinylpolymer und Polycarbonate enthalten und die über -O-C(=O)-NH-, -NH-C(=O)O-, -NH-C(=O)-NH-, -NH-C(=O)-, -C(=O)-NH-, -C(=O)-O-, -O-C(=O)-, -O-C(=O)-O-, -S-C(=O)-NH-, -NH-C(=O)-S-, -C(=O)-S-, -S-C(=O)-, -S-C(=O)-S-, -C(=O)-, -S-, -O-, -NR'-, -CR'₂-, -P(=O)(OR')₂-, -O-CH₂-C(OH)H-CH₂-NR'-, -O-CH₂-C(OH)H-CH₂-S-, -O-CH₂-C(OH)H-CH₂-C(=O)-, -O-CH₂-C(OH)H-CH₂-O-, 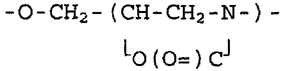 oder 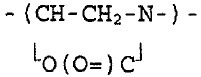 an die Gruppe - [(CR¹₂)_{b}-SiRₐ(OR²)₃₋ₐ] gebunden sind, wobei R' gleich oder verschieden sein kann und Wasserstoffatom oder eine für R angegebene Bedeutung hat.

Besonders bevorzugt handelt es sich bei Rest A um Polyoxyalkylen- und Polyacrylatreste, insbesondere um Polyoxyalkylenreste, die über -O-C(=O)-NH-, -C(=O)-O-, -O-C(=O)-O-, -O-, -O-CH₂-C(OH)H-CH₂-NR'-, -O-CH₂-C(OH)H-CH₂-S-, -O-CH₂-C(OH)H-CH₂-C(=O)- oder -O-CH₂-C(OH)H-CH₂-O- an die Gruppe - [(CR¹₂)_{b}-SiRₐ(OR²)₃₋ₐ] gebunden sind, wobei R' gleich oder verschieden sein kann und Wasserstoffatom oder eine für R angegebene Bedeutung hat.

Falls es sich bei Rest A um Polyoxyalkylenreste handelt, so enthalten diese bevorzugt Wiederholungseinheiten der Formel

-R⁷-O- (IV),

wobei
R⁷ gleich oder verschieden sein kann und einen gegebenenfalls substituierten zweiwertigen Kohlenwasserstoffrest mit 1 bis 12 Kohlenstoffatomen, der linear oder verzweigt sein kann, bedeutet.

Die Polyoxyalkylenreste A enthalten bevorzugt mindestens 50%, besonders bevorzugt mindestens 70%, Wiederholungseinheiten der Formel (IV), jeweils bezogen auf die Gesamtzahl der Wiederholungseinheiten.

Zusätzlich zu den Wiederholungseinheiten der Formel (IV) können die Polyoxyalkylenreste A noch weitere Einheiten, wie z.B. Amid-, Harnstoff-, Urethan-, Thiourethan-, Alkylen-, Arylen-, Ester-, Carbonat-, Imid- oder Imin-Einheiten, enthalten.

Beispiele für Rest R⁷ sind -CH₂-, -CH₂-CH₂-, -CH₂-CH(CH₃) -, -CH₂-CH₂-CH₂-, -CH₂-CH(-CH₂-CH₃)-, -CH(CH₃)-CH(CH₃)-, -CH₂-CH₂-CH₂-CH₂-und -CH₂-C(CH₃)₂-.

Bevorzugt handelt es sich bei Rest R⁷ um einen zweiwertigen, gegebenenfalls substituierten Kohlenwasserstoffrest mit 1 bis 4 Kohlenstoffatomen, besonders bevorzugt um einen zweiwertigen Kohlenwasserstoffrest mit 1 bis 4 Kohlenstoffatomen, ganz besonders bevorzugt um -CH₂-CH₂- und -CH₂-CH(CH₃)-, insbesondere um - -CH₂-CH(CH₃)-.

Bevorzugt handelt es sich bei den erfindungsgemäß eingesetzten Verbindungen (A1) um Polypropylenglykole, Polyurethane oder Polyacrylate enthaltene Polymere mit Silylgruppen, die Hydroxylgruppen oder andere kondensierbare Gruppen enthalten und zur Ausbildung von Siloxanbindungen fähig sind, wobei Polypropylenglykole oder Polyurethane enthaltene Polymere mit Silylgruppen, die Hydroxylgruppen oder andere kondensierbare Gruppen enthalten und zur Ausbildung von Siloxanbindungen fähig sind, besonders bevorzugt sind.

Beispiele für Komponente (A1) sind Tris-(Organyloxy)silylalkylgruppen oder Bis-(Organyloxy)-methyl-silylalkylgruppen aufweisende organische Polymere, wie Polyacrylate, Vinylpolymere, Polyurethane und Polyglykole, die linear oder verzweigt sein können. Die Herstellung dieser Polymere kann durch bekannte Verfahren erfolgen, wie Additionsreaktionen, wie z.B. der Hydrosilylierung, Michael-Addition, Diels-Alder-Addition, der Addition von Isocyanat an Epoxide oder an aktiven Wasserstoff aufweisende reaktive Gruppen, wie Amine, Amide, Hydroxyl- oder Mercaptogruppen, der Addition von Epoxiden an aktiven Wasserstoff aufweisende reaktive Gruppen, wie Amine, Carbonylgruppen, Phenole oder Mercaptogruppen, sowie der Addition von Aziridine an Carbonylgruppen oder der Copolymerisation von Vinylsilanen mit organischen Doppelbindung aufweisenden Monomeren bzw. der Pfropfung von Vinylsilanen an Vinylpolymere oder der Copolymerisation von Vinylsilanen und/oder Methacryloxypropylsilanen und/oder Methacryloxymethylsilanen mit organischen Doppelbindung aufweisenden Monomeren, wobei durch Anwendung der kontrollierten freien radikalischen Polymerisation nach dem nitroxylkontrollierten CFRP-, dem ATRP- oder dem RAFT-Verfahren, Polymere mit enger Molmassenverteilung hergestellt werden können, welche die Silylgruppen an den Polymerenden tragen. Die Herstellmethoden können gegebenenfalls miteinander kombiniert werden.

Als Komponente (A1) können aber auch Copolymere aus Siloxanblöcken und organischen Polymeren verwendet werden, wie z.B. in EP-B1 1 370 602 beschrieben, die zum Offenbarungsgehalt der vorliegenden Anmeldung zu zählen ist.

Bei den erfindungsgemäß eingesetzten Polymeren (A1) kann es sich um Homopolymere wie auch um Copolymere handeln, die jeweils linear oder verzweigt sein können. Die Komponente (A1) kann dabei die Gruppen [(CR¹₂)_{b}-SiRₐ(OR²)₃₋ₐ] an beliebigen Stellen im Polymer aufweisen, wie etwa kettenständig und/oder endständig.

Bevorzugt ist in Formel (III) die Summe c+d kleiner oder gleich 3.

Bevorzugt handelt es sich bei Rest R⁵ um einwertige Kohlenwasserstoffreste mit 1 bis 18 Kohlenstoffatomen, die gegebenenfalls mit Halogenatomen, Aminogruppen, Ethergruppen, Estergruppen, Epoxygruppen, Mercaptogruppen, Cyanogruppen oder (Poly)-glykolresten substituiert sind, wobei letztere aus Oxyethylen- und/oder Oxypropyleneinheiten aufgebaut sind, besonders bevorzugt um Alkylreste mit 1 bis 12 Kohlenstoffatomen, insbesondere um den Methylrest. Es kann sich bei Rest R⁵ aber auch um zweiwertige Reste handeln, die z.B. zwei Silylgruppen miteinander verbinden.

Beispiele für Rest R⁵ sind die für Rest R angegebenen Beispiele.

Beispiele für zweiwertige Reste R⁵ sind Polyisobutylendiylreste, Polymethacrylsäuremethylesterdiylreste, Polymethacrylsäurebutylesterdiylreste und propandiylterminierte Polypropylenglykolreste.

Beispiele für Reste Z sind Hydroxylgruppen, Acetoxyreste, Oximatoreste und Organyloxyreste -OR⁶, wobei R⁶ einwertige, gegebenenfalls substituierte Kohlenwasserstoffreste, die durch Sauerstoffatome unterbrochen sein können, bedeutet, wie z.B. Methoxyreste, Ethoxyreste, Alkoxyethoxyreste und hydroxyhaltige Reste, wie 2-Hydroxypropoxy-, 2-Hydroxy-1-Methyl-propoxy-, 2-Hydroxybutoxy-, 1-Hydroxy-2-Methyl-ethoxy- oder 2-Hydroxy-ethoxyrest.

Beispiele für Reste R⁶ sind die für R angegebenen Reste.

Bevorzugt handelt es sich bei Rest Z um Hydroxylgruppen, Oximatoreste und Organyloxyreste -OR⁶, besonders bevorzugt um Hydroxylgruppen und Organyloxyreste -OR⁶, insbesondere um Hydroxylgruppen sowie Methoxy- und Ethoxyreste, wobei R⁶ die obengenannte Bedeutung hat.

Bevorzugt handelt es sich bei den erfindungsgemäß eingesetzten Verbindungen (A2) um im wesentlichen lineare Organopolysiloxane, wobei solche der Formel

Z₃₋ᵤR⁵ᵤSi-O-(SiR⁵₂-O)ᵥ-SiR⁵ᵤZ₃₋ᵤ (V)

besonders bevorzugt sind, wobei
R⁵ und Z jeweils eine der oben angegebenen Bedeutungen haben,
v gleich eine ganze Zahl von 30 bis 3000 ist und
u gleich oder verschieden sein kann und 0, 1 oder 2 ist.

Bevorzugt ist v eine ganze Zahl von 200 bis 2000.

Vorzugsweise ist u gleich 2, wenn Z die Bedeutung von Hydroxylgruppe hat, und u gleich 0 oder 1, wenn Z eine Bedeutung verschieden Hydroxylgruppe hat.

Beispiele für Organosiliciumverbindungen (A2) sind
(MeO)₂MeSiO[SiMe₂O]₂₀₀₋₂₀₀₀SiMe(OMe)₂,
(MeO)₂MeSiO[SiMe₂O]₂₀₀₋₂₀₀₀SiMe(OEt)₂,
(MeO)₃SiO[SiMe₂O]₂₀₀₋₂₀₀₀SiMe(OMe)₂,
(MeO)₃SiCH₂CH₂[SiMe₂O]₂₀₀₋₂₀₀₀SiMe₂-CH₂CH₂Si(OMe)₃,
(HO)Me₂SiO[SiMe₂O]₂₀₀₋₂₀₀₀SiMe₂(OH),
(EtO)₂MeSiO[SiMe₂O]₂₀₀₋₂₀₀₀SiMe(OEt)₂,
(HO)MeViSiO[SiMe₂O]₂₀₀₋₂₀₀₀SiMeVi(OH),
(MeO)₂MeSiO[SiMe₂O]₂₀₀₋₂₀₀₀SiVi(OMe)₂,
(MeO)₂MeSiO[SiMe₂O]₂₀₀₋₂₀₀₀SiVi(OMe)(OEt),
(Et(Me)C=NO)₂MeSiO[SiMe₂O]₂₀₀₋₂₀₀₀SiVi(ON=C(Me)Et)₂,
(Et(Me)C=NO)₂MeSiO[SiMe₂O]₂₀₀₋₂₀₀₀Si(ON=C(Me)Et)₃,
(Et(Me)C=NO)(MeO)MeSiO[SiMe20]₂₀₀₋₂₀₀₀SiVi(OMe)(ON=C(Me)Et),
(Et(Me)C=NO)₂MeSiO[SiMe₂O]₂₀₀₋₂₀₀₀Si(OMe)(ON=C(Me)Et)₂,
(Et(Me)C=NO)₂MeSiO[SiMe₂O]₂₀₀₋₂₀₀₀SiVi(OMe)₂,
(EtO)₂(Morph-CH₂)SiO[SiMe₂O]₂₀₀₋₂₀₀₀Si(CH₂-Morph) (OEt)₂,
(MeO)₂(cHex-NHCH₂CH₂CH₂)SiO[SiMe₂O]₂₀₀₋₂₀₀₀Si(CH₂CH₂CH₂NH-cHex) (OMe)₂, (EtO)₂(cHex-NHCH₂)SiO[SiMe₂O]₂₀₀₋₂₀₀₀Si(CH₂NH-cHex) (OEt)₂,
(MeO)₂ViSiO[SiMe₂O]₂₀₀₋₂₀₀₀SiVi(OMe)₂ und
(EtO)(MeO)ViSiO[SiMe₂O]₂₀₀₋₂₀₀₀SiVi(OEt)(OMe),
wobei Me Methylrest, Et Ethylrest, cHex Cyclohexylrest, Morph N-Morpholinorest und Vi Vinylrest bedeutet.

Bevorzugt handelt es sich bei den erfindungsgemäß eingesetzten Verbindungen (A2) um
(MeO)₂MeSiO[SiMe₂O]₂₀₀₋₂₀₀₀SiMe(OMe)₂,
(HO)Me₂SiO[SiMe₂O]₂₀₀₋₂₀₀₀SiMe₂(OH),
(MeO)₂MeSiO[SiMe₂O]₂₀₀₋₂₀₀₀SiVi(OMe)₂,
(Et(Me)C=NO)₂MeSiO[SiMe₂O]₂₀₀₋₂₀₀₀SiVi(ON=C(Me)Et)₂,
(Et(Me)C=NO)₂MeSiO[SiMe₂O]₂₀₀₋₂₀₀₀Si(ON=C(Me)Et)₃,
(EtO)₂Morph-CH₂SiO[SiMe₂O]₂₀₀₋₂₀₀₀SiCH₂-Morph(OEt)₂ und
(MeO)₂ViSiO[SiMe₂O]₂₀₀₋₂₀₀₀SiVi(OMe)₂, wobei
(MeO)₂MeSiO[SiMe₂O]₂₀₀₋₂₀₀₀SiMe(OMe)₂,
(HO)Me₂SiO[SiMe₂O]₂₀₀₋₂₀₀₀SiMe₂(OH),
(MeO)₂MeSiO[SiMe₂O]₂₀₀₋₂₀₀₀SiVi(OMe)₂,
(EtO)₂Morph-CH₂SiO[SiMe₂O]₂₀₀₋₂₀₀₀SiCH₂-Morph(OEt)₂ und
(MeO)₂ViSiO[SiMe₂O]₂₀₀₋₂₀₀₀SiVi(OMe)₂ besonders bevorzugt sind mit Me gleich Methylrest, Et gleich Ethylrest, Morph gleich N-Morpholinorest und Vi gleich Vinylrest.

Die erfindungsgemäß eingesetzten Verbindungen (A1) und (A2) sind handelsübliche Produkte bzw. können nach in der Siliciumchemie gängigen Methoden hergestellt werden.

Bevorzugt wird als Komponente (A) entweder Verbindungen (A1) oder Verbindungen (A2) oder Mischungen aus Verbindungen (A1) und (A2) eingesetzt, wobei in diesen Mischungen eine der beiden Verbindungen in einer Menge unter 5 Gew.-% enthalten ist. Besonders bevorzugt handelt es sich bei Komponente (A) entweder um Verbindungen (A1) oder um Verbindungen (A2).

Die erfindungsgemäß eingesetzten Verbindungen (A) haben eine Viskosität von bevorzugt 100 bis 1 000 000 mm²/s, besonders bevorzugt von 1 000 bis 350 000 mm²/s, jeweils bei 25°C.

Beispiele für unbeschichtete Calciumcarbonat haltige Füllstoffe (B0), welche der erfindungsgemäß eingesetzten Komponente (B) zugrunde liegen, sind gemahlene natürliche Kreide, gemahlener natürlicher Kalkstein oder natürlicher Marmor mit einem Calciumcarbonatgehalt von bevorzugt über 85 Gew.-% und gefälltes Calciumcarbonat mit einem Calciumcarbonatgehalt von bevorzugt über 95 Gew.-%.

Weiterhin können in den Füllstoffen (B0) Salze und Oxide von Magnesium, Silizium, Aluminium, Calcium, Kalium, Natrium, Titan und Eisen sowie andere in natürlichen Rohstoffen vorkommende Salze und Oxide im Spurenbereich vorkommen. Des Weiteren können bis zu 2 Gew.-% Verarbeitungshilfsmittel, wie Mahlhilfsmittel oder Fällungshilfsmittel, in den Füllstoffen enthalten sein.

Die unbeschichteten Calciumcarbonat haltigen Füllstoffe (B0), welche der erfindungsgemäß eingesetzten Komponente (B) zugrunde liegen, sind nicht mit organischen oder siliciumorganischen Stoffen beschichtet. Füllstoffe (B0) sind bevorzugt im Wesentlichen frei von organischen oder siliciumorganischen Stoffen, wie z.B. Fettsäuren, wie Stearinsäure, Harzsäuren, Silanen, wie Methyltrimethoxysilan oder n-Octyltriethoxysilan, sowie Siloxanen, wie Polydimethylsiloxan oder Polymethylhydrogensiloxan, wobei sie besonders bevorzugt völlig frei von organischen oder siliciumorganischen Stoffen sind.

Bevorzugt handelt es sich bei den erfindungsgemäß eingesetzten Calciumcarbonat haltigen Füllstoffen (B0) um gemahlenen natürlichen Kalkstein mit einem Calciumcarbonatgehalt von über 85 Gew.-%, natürlichen Marmor mit einem Calciumcarbonatgehalt von über 85 Gew.-% und gefälltes Calciumcarbonat mit einem Calciumcarbonatgehalt von über 95 Gew.-%, wobei gemahlener natürlicher Kalkstein mit einem Calciumcarbonatgehalt von über 90 Gew.-%, natürlicher Marmor mit einem Calciumcarbonatgehalt von über 90 Gew.-% und gefälltes Calciumcarbonat mit einem Calciumcarbonatgehalt von über 95 Gew.-% besonders bevorzugt sind.

Bevorzugt weist der erfindungsgemäß eingesetzte Füllstoff (B0) einen Feuchtigkeitsgehalt von unter 0,5 Gew.-% auf, besonders bevorzugt von 0,3 bis 0,01 Gew.-%. Um den gewünschten Feuchtigkeitsgehalt des Füllstoffs (B0) zu erhalten, kann eine ggf. durchgeführte Trocknung des Füllstoffs von Vorteil sein. Dies kann z.B. durch Erwärmen, Austreiben mit heißen Gasen, Vakuumierung, behandeln mit Microwelle oder einer Kombination der Verfahren geschehen.

Als Vakuum im Sinne der vorliegenden Erfindung sind Drücke im Bereich von 10 bis 300 mbar Absolutdruck zu verstehen.

Bevorzugt als Komponente (B0) sind weiße bis graue Füllstoffe, was insbesondere für den Einsatz in Dichtmassen vorteilhaft ist. Der Weißheitsgrad der erfindungsgemäß eingesetzten Komponente (B0) ist bevorzugt größer 85 %, gemessen nach ISO 2470 bei 457 nm. Beim Einsatz von natürlichen Rohstoffen (B0) werden zu stark gefärbte Teilchen bevorzugt aussortiert.

Beim Einsatz von gemahlenen natürlichen Kalksteinen und Marmor als Komponente (B0) können neben Calciumcarbonat auch Magnesiumcarbonat und Oxide von Strontium, Barium, Mangan, Silizium, Eisen, Titan, Kalium, Natrium und Aluminium auftreten. Die Hauptminerale sind Calcit, Aragonit und Dolomit.

Die mittlere Teilchengröße (D50) von gemahlenen natürlichen Kalksteinen und Marmor (B0) liegt im Bereich von bevorzugt 0,2 bis 30 µm, besonders bevorzugt 0,2 bis 10 µm.

Die BET-Oberfläche von gemahlenen natürlichen Kalksteinen und Marmor (B0) liegt im Bereich von bevorzugt 0,5 bis 10 m²/g, besonders bevorzugt 1 bis 10 m²/g.

Beim Einsatz von gefällten Calciumcarbonaten liegt der Calciumcarbonatgehalt bevorzugt über 99 Gew.-%. Die Teilchen liegen in verschiedenen Kristallstrukturen oder Kornformen vor, wie Stäbchenform in Somatoide oder Skalenoder, Rhomboeder, Prismen, Plättchen, Nadelbündel oder Kugelform.

Die mittlere Teilchengröße (D50) von gefällten Calciumcarbonaten (B0) liegt im Bereich von 0,02 bis 1 µm, besonders bevorzugt 0,03 bis 0,6 µm.

Die BET-Oberfläche von gefällten Calciumcarbonaten (B0) liegt im Bereich von bevorzugt 5 bis 40 m²/g, besonders bevorzugt 6 bis 35 m²/g.

Beispiele für Reste R³ sind Wasserstoffatom sowie die für R angegebenen Reste.

Bevorzugt handelt es sich bei Rest R³ um Wasserstoffatom und Kohlenwasserstoffreste mit 1 bis 6 Kohlenstoffatomen, besonders bevorzugt um Wasserstoffatom und den Methylrest, insbesondere um Wasserstoffatom.

Beispiele für Reste R⁴ sind gegebenenfalls substituierte Kohlenwasserstoffreste mit 2 bis 50 Kohlenstoffatomen, die durch Sauerstoffatome unterbrochen sein können, wie CH₃OCH₂CH₂-, CH₃OCH₂CH₂OCH₂CH₂-, CH₃O(CH₂CH₂O)₂₋₂₀CH₂CH₂-, CH₃(CH₂)₁₁₋₁₃O(CH₂CH₂O)₀₋₂₀CH₂CH₂ - , CH₃(CH₂)₅₋₇CH=CH(CH₂)₈O(CH₂CH₂O)₀₋₂₀CH₂CH₂-, C₉H₁₉C₆H₄O(CH₂CH₂O)₀₋₂₀CH₂CH₂-, (CH₃)₃CC₆H₄O(CH₂CH₂O)₀₋₂₀CH₂CH₂-, -CH₂CH₂-, -CH₂CH₂OCH₂CH₂-, -CH₂CH₂(OCH₂CH₂)₂₋₂₀- und -(CH₂CH₂O)₁₋₈CH₂CH(OCH₂CH₂-)₁₋₈CH₂(OCH₂CH₂)₁₋₈-.

Bevorzugt handelt es sich bei Rest R⁴ um gegebenenfalls substituierte Kohlenwasserstoffreste mit 2 bis 30 Kohlenstoffatomen, die durch Sauerstoffatome unterbrochen sein können, besonders bevorzugt um gegebenenfalls substituierte Kohlenwasserstoffreste mit 3 bis 30 Kohlenstoffatomen, die durch Sauerstoffatome unterbrochen sein können, insbesondere um den 2-Methoxyethylrest, den 2-(2-Methoxyethoxy)ethylrest und den 2-(2-Alkoxyethoxy)-ethylrest.

Bevorzugt handelt es sich bei y um 1 oder 2, besonders bevorzugt um 1.

Beispiele für Carbonsäuren (C), mit denen Füllstoffe (B0) beschichtet werden, sind 3,6-Dioxaheptansäure, 3,6,9-Trioxadecansäure, 3,6-Dioxaoctandisäure, 3,6,9-Trioxaundecandisäure, Poly-(ethylenglykol)-disäure, wie Poly-(ethylenglykol)-disäure mit einer Molmasse von ca. 200 g/mol oder ca. 600 g/mol, Glykolsäure-ethoxylat-ether, wie Glykolsäure-ethoxylat-4-nonylphenylether mit einer mittleren Molmasse von ca. 600 g/mol, Glykolsäure-ethoxylat-4-tert.-butylphenylether mit einer mittleren Molmasse von ca. 380 g/mol, Glykolsäure-ethoxylat-oleylether mit einer mittleren Molmasse von ca. 700 g/mol, Glykolsäure-ethoxylat-laurylether mit einer mittleren Molmasse von ca. 360 g/mol, ca. 460 g/mol oder ca. 690 g/mol, wobei 3,6-Dioxaheptansäure, 3,6,9-Trioxadecansäure, 3,6-Dioxaoctandisäure, 3,6,9-Trioxaundecandisäure, Poly-(ethylenglykol)-disäure mit einer Molmasse von ca. 600 g/mol, Glykolsäure-ethoxylat-4-tert.-butylphenylether mit einer mittleren Molmasse von ca. 380 g/mol und Glykolsäure-ethoxylat-laurylether mit einer mittleren Molmasse von ca. 360 g/mol oder ca. 460 g/mol bevorzugt und 3,6-Dioxaheptansäure, 3,6,9-Trioxadecansäure, 3,6,9-Trioxaundecandisäure, Poly-(ethylenglykol)-disäure mit einer Molmasse von ca. 600 g/mol, Glykolsäure-ethoxylat-laurylether mit einer mittleren Molmasse von ca. 360 g/mol oder ca. 460 g/mol besonders bevorzugt sind.

Bevorzugt handelt es sich bei der Carbonsäure (C) um Verbindungen mit einem Schmelzpunkt bei 1000 hPa von unter 20°C, besonders bevorzugt um Verbindungen mit einem Schmelzpunkt bei 1000 hPa von unter 0°C und einer Molmasse von über 100 g/mol, insbesondere um Verbindungen mit einem Schmelzpunkt bei 1000 hPa von unter 0°C und einer Molmasse von 130 bis 700 g/mol.

Die erfindungsgemäß eingesetzte Komponente (B) kann auf verschiedene und an sich bekannte Art und Weise hergestellt werden, wie beispielsweise durch
i) Behandlung des getrockneten Füllstoffs (B0) mit Carbonsäure (C),
ii) Behandlung des feuchten Füllstoffs (B0) mit Carbonsäure (C) und anschließender Trocknung,
iii) Verrühren des getrockneten Füllstoffs (B0) mit einer Flüssigkeit, wie Verbindung (A), Weichmacher (F) oder organisches Lösungsmittel (L), und Zusatz der Carbonsäure (C) sowie gegebenenfalls weiteren Komponenten,
iv) Verrühren des feuchten Füllstoffs mit einer Flüssigkeit, wie Verbindung (A), Weichmacher (F) oder organisches Lösungsmittel (L), und Zusatz der Carbonsäure (C) sowie gegebenenfalls weiteren Komponenten, sowie gleichzeitiger oder anschließender Trocknung, wobei Varianten iii) und iv) bevorzugt und Variante iii) besonders bevorzugt sind.

Bei den erfindungsgemäßen Varianten i) und ii) erfolgt die Beschichtung bevorzugt durch Besprühen des unbehandelten Calciumcarbonat haltigen Füllstoffs (B0) mit der Carbonsäure (C).

Das Beschichten des Füllstoffs (B0) nach den Varianten i) und ii) wird bei Temperaturen von bevorzugt 10 bis 150°C, besonders bevorzugt von 20 bis 100°C, sowie bei einem Absolutdruck von bevorzugt 0,1 kPa bis 500 kPa, besonders bevorzugt von 1 kPa bis 110 kPa durchgeführt.

Bei den Varianten iii) und iv) wird die Mischung bevorzugt im Vakuum entgast und/oder getrocknet. Die Temperatur kann bei diesen Varianten durch die eingesetzten Mengen an Flüssigkeit und der daraus resultierenden Pastenviskosität geregelt werden.

Weniger Flüssigkeit erhöht die Pastenviskosität und damit, bei gleicher Rührgeschwindigkeit, auch die eingetragene Mischenergie. Dadurch werden höhere Temperaturen erzeugt. Durch gleichzeitiges Anlegen eines Vakuums kann die Masse besser entgast und getrocknet werden. Vorteilhaft ist das vorherige Homogenisieren der Flüssigkeiten mit der Carbonsäure (C). Somit erhält man eine gleichmäßigere Beschichtung der Komponente (B0).

Bei der Herstellung der Komponente (B) richten sich die eingesetzten Mengen nach der BET-Oberfläche der Komponente (B0) und der Molmasse der Carbonsäure (C).

Bevorzugt wird zur Herstellung der erfindungsgemäß eingesetzten Komponente (B) Carbonsäure (C) in Mengen von bevorzugt 0,01 bis 5 Gewichtsteilen, besonders bevorzugt 0,03 bis 3 Gewichtsteilen, insbesondere 0,05 bis 2 Gewichtsteilen, jeweils bezogen auf 100 Gewichtsteile Komponente (B0), eingesetzt.

Die Herstellung der Komponente (B) kann batchweise oder kontinuierlich erfolgen.

Bevorzugt handelt es sich bei der erfindungsgemäß eingesetzten Komponente (B) um Calciumcarbonat haltigen Füllstoff, dessen Oberfläche teilweise oder vollständig eine monomolekulare Schicht mit Carbonsäure (C) erhält, besonders bevorzugt sind 1 bis 90 % der Oberfläche belegt, insbesondere 1 bis 75 %.

Die erfindungsgemäßen Massen enthalten Komponente (B) in Mengen von bevorzugt 1 bis 500 Gewichtsteilen, besonders bevorzugt 5 bis 300 Gewichtsteilen, insbesondere 10 bis 200 Gewichtsteilen, jeweils bezogen auf 100 Gewichtsteile Komponente (A).

Außer den oben beschriebenen erfindungsgemäß eingesetzten Komponenten können die erfindungsgemäßen Massen alle weiteren Stoffe enthalten, die auch bisher in vernetzbaren Massen eingesetzt wurden, wie z.B. Katalysatoren (D), Vernetzer (E), Weichmacher (F), Füllstoffe (G), Haftvermittler (H), Additive (I) und organische Lösungsmittel (L), wobei (D), (E), (F), (G) und (H) verschieden sind zu den Komponenten (A), (B) und (C) sind.

Als gegebenenfalls eingesetzte Katalysatoren (D) können alle bisher bekannten Kondensationskatalysatoren eingesetzt werden.

Beispiele für Kondensationskatalysatoren (D) sind die bisher bekannten Titanverbindungen, wie Tetra-tert.-butyl-orthotitanat, Titan(IV)-bis-(ethylacetoacetato)-diisobutoxid, Titan(IV)-bis-(ethylacetoacetato)-dimethoxid, Titan(IV)-bis-(ethylacetoacetato)-diethoxid, Titan(IV)-bis-(ethylacetoacetato)-monoethoxid-monomethoxid oder Titan(IV)-bis-(ethylacetoacetato)-diisopropoxid und organische Zinnverbindungen, wie Di-n-butylzinndilaurat, Di-n-butylzinndiacetat, Di-n-butylzinnoxid, Di-n-butylzinndineodecanoat, Di-n-butylzinndiacetylacetonat, Di-n-butylzinnmaleat, Di-n-octylzinndiacetat, Di-n-octylzinndilaurat, Din-octylzinnoxid, Di-n-octylzinnmaleat, Di-n-octylzinndi(2-ethyl)hexanoat, Di-n-octylzinnneodecanoat, Di-n-octylzinnisodecanoat deren Teilhydrolysate und Umsetzungsprodukte dieser Verbindungen oder Teilhydrolysate mit Alkoxysilanen, wie Tetraethoxysilan, Methyltriethoxysilan, Methyltrimethoxysilan, Propyltrimethoxysilan, 3-Aminopropyl-trimethoxysilan, 3-Aminopropyltriethoxysilan, 2-Aminoethyl-3-aminopropyl-trimethoxysilan, 2-Aminoethyl-3-aminopropyl-trimethoxysilan oder deren Kondensations- oder Cokondensationsprodukte, Estern, wie Phthalsäurediisodecylester, Phthalsäuredi-n-octylester, oder Phthalsäurediisodecylester, sowie Mischungen oder Umsetzungsprodukte von Titan- oder Zinnverbindungen mit Phosphonsäuren, Phosphinsäuren, Phosphonsäuremonoestern oder Phosphorsäuremono- oder diestern.

Des Weiteren können als Kondensationskatalysatoren (D) auch Lewissäuren eingesetzt werden, wie Titantetrachlorid, Siliziumtetrachlorid, Siliziumtetrafluorid, t-Buyltrichlorogerman, Methyltrichlorsilan, Dimethyldichlorsilan, Bortrifluorid, sowie deren Additionsaddukt mit Aminen, wie Ethylamin, Ether, wie Diethylether oder Alkoholen, wie Methanol, Ethanol oder Isopropanol.

Ferner können als Kondensationskatalysatoren (D) auch Säuren, welche B-OH, C(O)-OH, S(O)₂-OH und/oder P(O)-OH Gruppen enthalten, sowie HF, HCl, HBr oder HJ eingesetzt werden. Beispiele für solche Säuren sind Carbonsäuren, Borsäure, Boronsäuren, Borinsäuren, Sulfonsäuren, Phosphorsäuren, Phosphonsäuren und Phosphinsäuren oder deren Kondensations- oder Cokondensationsprodukte sowie deren Mono-, Di- oder Triester von Alkoholen wie Methanol, Ethanol, Isopropanol, n-Propanol, tert-Butanol, n-Butanol, iso-Butanol, Cyclohexanol, n-Octylalkohol, Laurylalkohol; von Silanolen, wie Trimethylsilanol, Methyldimethoxysilanol oder Triethoxysilanol. Beispiele sind die n-Octansäure, Neodecansäure, Ölsäure, Adipinsäuremonoethylester, Malonsäuremonoethylester, Borsäuremonooctylester, Borsäurediisodecylester, Butylboronsäure, Dibutylborinsäureaminethylester, Octylsulfonsäure, Dodecylbenzolsulfonsäure, Octylphosphat, Dioctylphosphat, Octylphosphonsäure, Octylphosphonsäuremonomethylester, Octylphosphonsäuremonotrimethylsilylester, Laurylphosphonsäure, Vinylphosphonsäure und Diisooctylphosphinsäure.

Des Weiteren können als Kondensationskatalysatoren (D) auch Basen eingesetzt werden, insbesondere Verbindungen, welche basischen Stickstoff oder Phosphor enthalten. Beispiele sind Amine, Hydrazine, Amidine, Guanidine, Tetraalkylammoniumhydroxid oder Tetraalkylphosphoniumhydroxid. Beispiele sind das Ethylamin, Butylamin, Laurylamin, Diethylamin, Di-n-butylamin, Triethylamin, Triisooctylamin, Trioctylamin, Methyldioctylamin, N-Diethylamino-3-proylamin, 1-o-Tolylbiguanide, Tetramethylguanidin, Butylguanidin, 1,5-Diazabicyclo[4.3.0]non-en, 1,4-Diazabicyclo[2.2.2]octan, 1,8-Diazabicyclo[5.4.0]undec-7-en, 1,5,7-Triazabicyclo[4.4.0]-dec-5-en, Methyl-1,5,7-Triazabicyclo-[4.4.0]-dec-5-en, Tetrabutylammoniumhydroxid und Tetrabutylphosphoniumhydroxid (D).

Durch synergetische Kombinationen von oben genannten Katalysatoren kann die katalytische Wirkung auf die Hydrolyse von Si-OR und/oder auf die Kondensationsreaktion von Si-OH mit Si-OH oder Si-OR stark beschleunigt werden und somit die Aushärtung beschleunigt oder die Menge an Katalysator verringert werden.

Mögliche synergetische Kombinationen sind Säure mit Basen, Lewissäuren mit Basen und die obengenannten Zinnverbindungen mit Basen.

Bevorzugt handelt es sich bei den gegebenenfalls eingesetzten Katalysatoren (D) um Titanverbindungen, Organozinnverbindungen, organische Basen und organische Basen mit Säuren, welche C(O)-OH und/oder P(O)-OH Gruppen enthalten, wobei Organozinnverbindungen besonders bevorzugt sind.

Die gegebenenfalls eingesetzte Komponente (D) sind handelsübliche Produkte bzw. nach in der Chemie gängigen Methoden herstellbar.

Fall die erfindungsgemäßen Massen Komponente (D) enthalten, handelt es sich um Mengen von bevorzugt 0,0001 bis 5 Gewichtsteilen, besonders bevorzugt 0,001 bis 3 Gewichtsteilen, insbesondere 0,005 bis 2 Gewichtsteilen, jeweils bezogen auf 100 Gewichtsteile Komponente (A). Die erfindungsgemäßen Massen enthalten bevorzugt Katalysator (D).

Bei den in den erfindungsgemäßen Massen gegebenenfalls eingesetzten Vernetzern (E) kann es sich um beliebige, bisher bekannte Vernetzer mit mindestens zwei kondensationsfähigen Resten handeln, wie beispielsweise Silane mit mindestens zwei Organyloxygruppen.

Besonders bevorzugt handelt es sich bei den in den erfindungsgemäßen Massen gegebenenfalls eingesetzten Vernetzern (E) um Silanvernetzer, wie Tetramethoxysilan, Tetraethoxysilan, Tetrapropoxysilan, Tetrabutoxysilan, Methyltrimethoxysilan, Dimethyldimethoxysilan, Methyltriethoxysilan, Methylvinyldimethoxysilan, Vinyltrimethoxysilan, Butyltrimethoxysilan, Vinyltriethoxysilan, Phenyltrimethoxysilan, Diphenyldimethoxysilan, Phenyltriethoxysilan, N-(Trimethoxysilylmethyl)-O-methyl-carbamat, N-(Dimethoxymethylsilylmethyl)-O-methyl-carbamat, (Methacryloxymethyl)trimethoxysilan, (Methacryloxymethyl)dimethoxymethylsilan, 1,2-Bis(trimethoxysilyl)ethan, 1,2-Bis(triethoxysilyl)-ethan, 1,1-Dimethoxy-3,3,3-Trimethyl-1-vinyl-disiloxan, Trimethylsiloxy-trimethoxysilan, Methyltriacetoxysilan, Ethyltriacetoxysilan, Propyltriacetoxysilan, Di-t-butoxydiacetoxysilan, Methyltris(methylethylketoximo)silan und Vinyltris(methylethylketoximo)silan, Tetra-kis-(methylethylketoximo)silan, Bis(N-Methylbenzamido)ethoxy-methylsilan, Methyltris-(propenyloxy)silan, Vinyltris-(propenyloxy)silan sowie deren Teilhydrolysate, die ggf. auch durch Cohydrolyse, wie z.B. durch Cohydrolyse von Methyltrimethoxysilan und Dimethyldimethoxysilan, dargestellt werden können.

Die in den erfindungsgemäßen Massen gegebenenfalls eingesetzten Vernetzer (E) sind handelsübliche Produkte bzw. können nach in der Siliciumchemie bekannten Verfahren hergestellt werden.

Falls die erfindungsgemäßen Massen Vernetzer (E) enthalten, handelt es sich um Mengen von vorzugsweise 0,1 bis 10 Gewichtsteilen, besonders bevorzugt 0,5 bis 3 Gewichtsteilen, jeweils bezogen auf 100 Gewichtsteile Komponente (A). Bevorzugt enthalten die erfindungsgemäßen Massen Vernetzer (E).

Beispiele für Weichmacher (F) sind bei Raumtemperatur flüssige, durch Trimethylsiloxygruppen endblockierte Polydimethylsiloxane, insbesondere mit Viskositäten bei 25°C im Bereich zwischen 50 und 1000 mPas, sowie hochsiedende Kohlenwasserstoffe, wie z.B. Paraffinöle, Dialkylbenzole, Dialkylnaphthaline oder Mineralöle bestehend aus naphthenischen und paraffinischen Einheiten, Polyglykole, insbesondere Polypropylenglykole, die gegebenenfalls substituiert sein können, hochsiedende Ester, wie z.B Phthalate, Terephthalate, Zitronensäureester oder Diester von Dicarbonsäuren, flüssige Polyester, Polyacrylate oder Polymethacrylate sowie Alkylsulfonsäureester.

Bevorzugt handelt es sich bei Weichmacher (F) um bei Raumtemperatur flüssige, durch Trimethylsiloxygruppen endblockierte Polydimethylsiloxane, insbesondere mit Viskositäten bei 25°C im Bereich zwischen 50 und 1000 mPas, sowie hochsiedende Kohlenwasserstoffe, wie z.B. Paraffinöle, Dialkylbenzole, Dialkylnaphthaline oder Mineralöle bestehend aus naphthenischen und paraffinischen Einheiten beim Einsatz von Verbindungen (A2), sowie um Polyglykole, insbesondere Polypropylenglykole, die gegebenenfalls substituiert sein können, hochsiedende Ester, wie z.B Phthalate, Terephthalate, Zitronensäureester oder Diester von Dicarbonsäuren, flüssige Polyester, Polyacrylate oder Polymethacrylate sowie Alkylsulfonsäureester beim Einsatz von Verbindungen A1.

Falls die erfindungsgemäßen Massen Weichmacher (F) enthalten, handelt es sich um Mengen von vorzugsweise 1 bis 300 Gewichtsteilen, besonders bevorzugt 10 bis 200 Gewichtsteilen, insbesondere 20 bis 100 Gewichtsteilen, jeweils bezogen auf 100 Gewichtsteile Bestandteil (A). Die erfindungsgemäßen Massen enthalten bevorzugt Weichmacher (F).

Beispiele für Füllstoffe (G) sind nicht verstärkende Füllstoffe, also Füllstoffe mit einer BET-Oberfläche von bis zu 50 m²/g, wie Quarz, Diatomeenerde, Calciumsilikat, Zirkoniumsilikat, Zeolithe, Metalloxidpulver, wie Aluminium-, Titan-, Eisenoder Zinkoxide bzw. deren Mischoxide, Bariumsulfat, Calciumcarbonat, Gips, Siliciumnitrid, Siliciumcarbid, Bornitrid, Glasund Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefälltes Calciumcarbonat, Ruß, wie Furnace- und Acetylenruß und Silicium-Aluminium-Mischoxide großer BET-Oberfläche; hohlkugelförmiger Füllstoffe, wie keramische Mikrokugel, wie z.B. solche erhältlich unter der Handelsbezeichnung Zeeospheres^{™} bei der Fa. 3M Deutschland GmbH in D-Neuss, elastische Kunststoffkugeln, wie etwa solche erhältlich unter der Handelsbezeichnung EXPANCEL^{®} bei der Fa. AKZO NOBEL, Expancel in Sundsvall, Schweden, oder Glaskugeln; faserförmige Füllstoffe, wie Asbest sowie Kunststofffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen. Falls Füllstoffe (G) eingesetzt werden, handelt es sich bevorzugt um hydrophobe pyrogene Kieselsäure und gefälltes oder gemahlenes Calciumcarbonat, wobei das zugesetzte Calciumcarbonat bevorzugt gefälltes ist, wenn (B0) ein gemahlener calciumcarbonathaltiger Füllstoff ist, bzw. das zugesetzte Calciumcarbonat bevorzugt gemahlenes ist, wenn (B0) ein gefällter calciumcarbonathaltiger Füllstoff ist.

Falls die erfindungsgemäßen Massen Füllstoffe (G) enthalten, handelt es sich um Mengen von vorzugsweise 1 bis 300 Gewichtsteilen, besonders bevorzugt 1 bis 200 Gewichtsteilen, insbesondere 2 bis 100 Gewichtsteilen, jeweils bezogen auf 100 Gewichtsteile Bestandteil (A). Die erfindungsgemäßen Massen enthalten bevorzugt Füllstoffe (G).

Beispiele für die in den erfindungsgemäßen Massen eingesetzten Haftvermittler (H) sind organische Verbindungen, Silane und Organopolysiloxane mit funktionellen Gruppen, wie beispielsweise solche mit Epoxy-, Glycidoxy-, Amino-, Imino-, Cyano-, Mercapto-, Hydroxyl-, Carboxyl-, Halogen-, Anhydrid-, Amid-, Peptid-, oder Methacryloxyresten sowie Tetraalkoxysilane und T- oder Q-Gruppen enthaltende Siloxane, die ggf. Alkoxygruppen aufweisen können. Falls jedoch bereits eine andere Komponente, wie etwa Weichmacher (F) oder Vernetzer (E), die genannten funktionellen Gruppen aufweist, kann auf einen Zusatz von Haftvermittler (H) verzichtet werden.

Bevorzugt handelt es sich bei Haftvermittler (H) um Silane und Organopolysiloxane mit Alkoxygruppen und mindestens einer organischen Gruppen die funktionelle Rest wie Epoxy-, Glycidoxy-, Amino-, Imino- oder Methacryloxyreste enthalten oder um organische Verbindungen mit mindestens eine Epoxy-, Glycidoxy-, Acryloxy- oder Methacryloxygruppe.

Falls die erfindungsgemäßen Massen Haftvermittler (H) enthalten, handelt es sich um Mengen von vorzugsweise 0,1 bis 50 Gewichtsteilen, besonders bevorzugt 0,5 bis 20 Gewichtsteilen, insbesondere 1 bis 10 Gewichtsteilen, jeweils bezogen auf 100 Gewichtsteile Bestandteil (A). Die erfindungsgemäßen Massen enthalten bevorzugt Haftvermittler (H).

Bei den in den erfindungsgemäßen Massen gegebenenfalls eingesetzten Additiven (I) kann es sich um beliebige, bisher bekannte Additive handeln.

Beispiele für Additive (I) sind Pigmente, Farbstoffe, Riechstoffe, Oxidationsinhibitoren, wie sterisch gehinderte Phenole, z.B. 2,6-Di-tert.-butyl-4-methyl-phenol (BHT), 1,6-Hexamethylen-bis-[3-(3,5-di-tert.-butyl-4-hydroxyphenyl)propionat], 2,2'-Methylen-bis(4-ethyl-6-tert.-butylphenol), 6,6'-Di-tert.-butyl-2,2'-thiodi-p-cresol, (2,4,6-Trioxo-1,3,5-triazin-1,3,5(2H,4H,6H)-triyl)triethylen-tris(3-(3,5-di-tert-butyl-4-hydroxyphenyl)propionat), 2,4,6-Tris-(3,5-di-tert.-butyl-4-hydroxybenzyl)mesitylen, Octadecyl-3-(3,5-di-tert.-butyl-4-hydroxyphenyl)propionat, N,N'-hexan-1,6-diylbis[3-(3,5-ditert.-butyl-4-hydroxyphenylpropionamid], 1,3,5-Tris(3,5-ditert.-butyl-4-hydroxybenzyl)-1,3,5-triazin-2,4,6(1H,3H,5H)-trion, 2-tert.-Butyl-6-(3-tert.-butyl-2-hydroxy-5-methylbenzyl)-4-methylphenyl-acrylat, C7-C9-verzweigtes Alkyl-[3-(3,5-di-tert.-butyl-4-hydroxyphenyl)]propionat, Thiodiethylen-bis[3-(3,5-di-tert-butyl-4-hydroxyphenyl)propionat], Pentaerythritoltetrakis(3-(3,5-di-tert.-butyl-4-hydroxyphenyl)propionat), Diethyl[[3,5-bis(1,1-dimethylene)-4-hydroxyphenyl]methyl]phosphonat, 1,2-Bis(3,5-di-tert.-butyl-4-hydroxyhydrocinnamoyl)hydrazin, 4,4'-Thiobis(2-tert.-butyl-5-methylphenol), 1,3,5-Tris(4-tert.-butyl-3-hydroxy-2,6-dimethylbenzyl)-1,3,5-triazine-2,4,6-(1H,3H,5H)-trion, Polymer mit sterisch gehindertem Phenol mit der CAS-Nr 68610-51-5 und 2,2'-Methylen-bis[6-(1-methylcyclohexyl)-p-cresol] oder Vitamin E, Fungizide, wie z.B. Isothiazolinone, insbesondere n-2-Octyl-2H-isothizolin-3-on, n-Butyl-1,2-benzisothiazolin-3-on oder 4,5-Dichlor-2-octyl-3(2H)-isothiazolin-3-on, 3-Iod-2-propinylbutylcarbamat, Thiabendazol, Carbendazim, 3-Benzo[b]thien-2-yl-5,6-dihydro-1,4,2-oxathiazin,4-oxide, Benzthiophen-2-cyclohexylcarboxamid-S,S-dioxid, 2-Thiazol-4-yl-1H-benzoimidazol, silberhaltige Trägerstoffe oder Nano-Silber, Triazolderivate, wie Tebuconazol oder Kombinationen von zwei oder drei Wirkstoffen, Mittel zur Beeinflussung der elektrischen Eigenschaften, wie leitfähiger Ruß, flammabweisend machende Mittel, Lichtschutzmittel, z.B. Benzotriazolderivate wie 2-(5-Chloro-2H-benzotriazol-2-yl)-6-(1,1-dimethylethyl)-4-methyl-phenol, 2,2'-(1,4-Phenylen)bis(4H-3,1-benzoxazin-4-on), 2-(2H-Benzotriazol-2-yl)-6-dodecyl-4-methylphenol, 2-(2H-Benzotriazol-2-yl)-4,6-bis(1-methyl-1-phenylethyl)phenol, 2-(2'-Hydroxy-3',5'-di-tert.-amylphenyl)benzotriazol, 2-(2'-Hydxoxyphenyl)-benzotriazol, 2-(2-Hydroxy-3-sec.-butyl-5-tert.-butylphenyl)-benzotriazol, 2,2'Methylen-bis[6-(2H-benzotriazol-2-yl)-4-(1,1,3,3-tetramethylbutyl)phenol], 2-(2'-Hydroxy-3',5'-di-tert.-butylphenyl)-5-chlorobenzotriazol, 2-(2'-Hydroxy-5'-methylphenyl)benzotriazol, 2-(2H-Benzotriazol-2-yl)4-methyl-6-dodecylphenol, 2,4-Di-tert.-butyl-6(5-chlorobenzotriazol-2-yl)phenol, 2-(2H-Benzotriazol-2-yl)-4,6-di-tert.-pentylphenol, Formamidine, wie Ethyl-4-[[(methylphenylamino)methylen]amino]-benzoat, Nanometalloxide z.B. des Titan, Eisens und Zinks, wobei die Oxide des Titans mit Silizium- und/oder Aluminiumoxid beschichtet sind, Hydroxyphenyltriazine wie 2,4-Bis(2,4-dimethylphenyl)-6-(2-hydroxy-4-iso-octyloxyphenyl)-1,3,5-triazin, 2-[4-[(2-Hydroxy-3-dodecyloxypropyl)oxy]-2-hydroxyphenyl]-4,6-bis-(2,4-dimethylphenyl)-1,3,5-triazin, 2-[4,6-Bis(2,4-dimethylphenyl)-1,3,5-triazin-2-yl]-5-{3-[(2-ethylhexyl)oxy]-2-hydroxypropoxy}phenol und Isooctyl-2-[4-[4,6-bis[(1,1'-biphenyl)-4-yl]-1,3,5-triazin-2-yl]-3-hydroxyphenoxy]propanoat, Oxaldianilide wie N-(2-Ethoxyphenyl)-N'-(2-ethylphenyl)-ethylendiamid, N,N'-Diphenyl-ethylendiamid, N-(5-(1,1-Dimethylethyl)-2-ethoxyphenyl)-N'-(2-ethylphenyl)-ethylendiamid und N-(2-ethoxyphenyl)-N'-(4-isododecylphenyl)-ethylendiamin, Radikalfänger, z.B. sterisch gehinderte Amine (HALS) wie Bis(2,2,6,6-tetramethyl-4-piperidyl)sebacat, 1,3,5-Triazin-2,4,6-triamin-N,N'-[1,2-ethandiyl-bis[[[4,6-bis-[butyl(1,2,2,6,6-pentamethyl-4-piperidinyl)-amino]-1,3,5-triazin-2-yl]imino]-3,1-propandiyl]], 2,2,6,6-Tetramethyl-4-piperidinyl Ester von C12-21 und C18-ungesättigten Fettsäuren, polymeres HALS mit der CAS-Nr. 65447-77-0, 3-Dodecyl-1-(2,2,6,6-tetramethyl-4-piperidinyl)-2,5-pyrrolidindion, Poly[(6-morpholino-s-triazin-2,4diyl)[2,2,6,6-Tetramethyl-4 piperidyl)imino]-hexamethylen [(2,2,6,6-tetramethyl-4-piperidyl)-imino], Poly[[6-C(1,1,3,3-tetramethylbutyl)amino]-1,3,5-triazin-2,4-diyl][(2,2,6,6-tetramethyl-4-piperidinyl)imino]-1,6-hexandiyl[(2,2,6,6-tetramethyl-4-piperidinyl)imino]], Methyl-1,2,2,6,6-pentamethyl-4-piperidylsebacat, Bis(1,2,2,6,6-pentamethyl-4-piperidyl)sebacat, Bis(2,2,6,6-tetramethyl-4-piperidyl)sebacat, N,N-Diphenyl-p-phenylendiamin, 1-Ethyl-2,2,6,6-tetramethyl-4-piperidyl-succinat-polyester, Bis(2,2,6,6-Tetramethyl-1-octyloxy-4-piperidyl)sebacat und polymeres Hals mit der CAS Number 192268-64-7, Mittel zur Verlängerung der Hautbildungszeit, wie Silane mit einem SiC-gebundenen Mercaptoalkylrest, zellenerzeugende Mittel, z.B. Azodicarbonamid, Hitzestabilisatoren, wie Triisodecylphosphit, Tris(nonylphenyl)phosphit oder Diisodecylphenylphosphit, sog. Scavenger, wie Si-N enthaltende Silazane oder Silylamide und Thixotropiermittel, wie beispielsweise Amidwachse, Harnstoffderivate oder hydriertes Rizinusöl.

Falls die erfindungsgemäßen Massen Additive (I) enthalten, handelt es sich bevorzugt um Pigmente, Farbstoffe, Oxidationsinhibitoren, Lichtschutzmittel, Fungizide, Radikalfänger und Thixotropiermittel, besonders bevorzugt um Pigmente, Fungizide, Lichtschutzmittel, Radikalfänger und Thixotropiermittel.

Falls die erfindungsgemäßen Massen Additive (I) enthalten, handelt es sich um Mengen von vorzugsweise 0,01 bis 100 Gewichtsteilen, besonders bevorzugt 0,05 bis 30 Gewichtsteilen, insbesondere 0,1 bis 10 Gewichtsteilen, jeweils bezogen auf 100 Gewichtsteile Bestandteil (A). Die erfindungsgemäßen Massen enthalten bevorzugt Additive (I).

Beispiele für organische Lösungsmittel (L) sind Alkohole, wie Methanol, Ethanol, Isopropanol oder Dipropylenglykol; Methylethylketoxim; Ester, wie Butylacetat, Ethyloleat, Diethyladipat, Propylencarbonat, Triethylphosphat, Glycerintriacetat oder Dimethylphthalat; Ether, wie Dipropylenglykolmonomethylether, Dipropylenglykoldimethylether, Dioxan, Tetrahydrofuran oder Butoxyethoxyethylacetat; Acetale, wie Dioxolan oder Butylal; Sulfoxide wie Dimethylsulfoxid; Pyrrolidone wie N-Methyl-2-pyrrolidon oder n-Octyl-2-pyrrolidon; Kohlenwasserstoffe, wie Hexan, Cyclohexan, Octan oder Dodecan; Aromaten, wie Alkylnaphthene oder Alkylbenzole; oder Mischungen davon.

Bevorzugt handelt es sich bei den Lösungsmitteln (L) um Alkohole, Ether, Acetale, Sulfoxide, Pyrrolidone, Kohlenwasserstoffe, Aromaten oder Mischungen davon besonders bevorzugt um Alkohole, Ether, Sulfoxide, Aromaten oder Mischungen davon.

Falls die erfindungsgemäßen Massen Lösungsmittel (L) enthalten, handelt es sich um Mengen von vorzugsweise 0,1 bis 10 Gewichtsteilen, besonders bevorzugt 0,3 bis 5 Gewichtsteilen, jeweils bezogen auf 100 Gewichtsteile Komponente (A). Bevorzugt enthalten die erfindungsgemäßen Massen kein Lösungsmittel (L).

Besonders bevorzugt handelt es sich bei den erfindungsgemäßen Massen um solche enthaltend
(A) mindestens eine vernetzungsfähige Verbindung
(B) mit Carbonsäuren (C) der Formel (I) oberflächenbehandelte Calciumcarbonat haltige Füllstoffe (B0),
   gegebenenfalls
(D) Katalysator,
   gegebenenfalls
(E) Vernetzer,
   gegebenenfalls
(F) Weichmacher,
   gegebenenfalls
(G) Füllstoffe,
   gegebenenfalls
(H) Haftvermittler,
   gegebenenfalls
(I) Additive und
gegebenenfalls
(L) organisches Lösungsmittel.

Insbesondere handelt es sich bei den erfindungsgemäßen Massen um solche herstellbar unter Verwendung von
(A) mindestens einer vernetzungsfähigen Verbindung,
   (B0) unbehandelten Calciumcarbonat haltigen Füllstoffen,
(C) Carbonsäuren der Formel (I),
   gegebenenfalls
(D) Katalysator,
   gegebenenfalls
(E) Vernetzer,
   gegebenenfalls
(F) Weichmacher,
   gegebenenfalls
(G) Füllstoffen,
   gegebenenfalls
(H) Haftvermittler,
   gegebenenfalls
(I) Additiven und
   gegebenenfalls
(L) organischen Lösungsmitteln.

Vorzugsweise enthalten die erfindungsgemäßen Massen außer den Komponenten (A) bis (L) keine weiteren Bestandteile.

Bei den erfindungsgemäßen Massen handelt es sich bevorzugt um zähflüssig bis pastöse Massen.

Die Herstellung kann nach beliebiger und an sich bekannter Art und Weise erfolgen.

So kann nach einer Verfahrensvariante 1 der oberflächenbehandelte Calciumcarbonat haltige Füllstoff (B) mit den übrigen Bestandteilen (A) sowie gegebenenfalls (D) bis (L) in beliebiger Reihenfolge vermischt werden.

Es kann jedoch auch nach einer Verfahrensvariante 2 der unbehandelte Calciumcarbonat haltige Füllstoff (B0) mit Carbonsäure (C) sowie den übrigen Bestandteilen (A) und gegebenenfalls (D) bis (L) in beliebiger Reihenfolge vermischt werden, so dass die Beschichtung von Füllstoff (B0) mit Komponente (C) in situ erfolgt. Bevorzugt wird bei dieser Verfahrensvariante zuerst Carbonsäure (C) mit Bestandteil (A) und/oder Weichmacher (F) und/oder Lösungsmittel (L) vermischt, gegebenenfalls im Vakuum, und anschließend Füllstoff (B0) zugegeben und durch inniges Vermischen mit der Carbonsäure (C) beschichtet. Nun kann die Vormischung mit den übrigen Bestandteilen in beliebiger Reihenfolge vermischt werden.

Das erfindungsgemäße Verfahren kann batchweise oder kontinuierlich erfolgen.

Das erfindungsgemäße Verfahren wird bei Temperaturen von bevorzugt 20 bis 135°C, besonders bevorzugt 20 bis 80°C, insbesondere bei Raumtemperatur, durchgeführt.

Das erfindungsgemäße Verfahren wird bevorzugt bei dem Druck der umgebenden Atmosphäre, also etwa 900 bis 1100 hPa, durchgeführt. Falls erwünscht, kann zeitweilig oder ständig unter vermindertem Druck gemischt werden, wie z.B. bei 30 bis 500 hPa Absolutdruck, um flüchtige Verbindungen und/oder Luft zu entfernen.

Bevorzugt erfolgt das erfindungsgemäße Vermischen der einzelnen Bestandteile unter weitestgehendem Ausschluss von Wasser.

Bei den einzelnen Bestandteilen der erfindungsgemäßen Massen kann es sich jeweils um eine Art eines solchen Bestandteils wie auch um ein Gemisch aus mindestens zwei verschiedenen Arten derartiger Bestandteile handeln.

Für die Vernetzung der erfindungsgemäßen Massen reicht der übliche Wassergehalt der Luft aus. Die Vernetzung der erfindungsgemäßen Massen erfolgt vorzugsweise bei Raumtemperatur. Sie kann, falls erwünscht, auch bei höheren oder niedrigeren Temperaturen als Raumtemperatur, z.B. bei -5° bis 15°C oder bei 30° bis 50°C und/oder mittels den normalen Wassergehalt der Luft übersteigenden Konzentrationen von Wasser durchgeführt werden.

Vorzugsweise wird die Vernetzung bei einem Druck von 100 bis 1100 hPa, insbesondere beim Druck der umgebenden Atmosphäre, also etwa 900 bis 1100 hPa, durchgeführt.

Ein weiterer Gegenstand der vorliegenden Erfindung sind Formkörper, hergestellt durch Vernetzung der erfindungsgemäßen Massen.

Die erfindungsgemäßen Massen können für alle Verwendungszwecke eingesetzt werden, für die unter Ausschluss von Wasser lagerfähige, bei Zutritt von Wasser bei Raumtemperatur zu Elastomeren vernetzende Massen eingesetzt werden können.

Die erfindungsgemäßen Massen eignen sich somit ausgezeichnet beispielsweise als Abdichtmassen für Fugen, einschließlich senkrecht verlaufender Fugen, und ähnlichen Leerräumen von z.B. 10 bis 40 mm lichter Weite, z.B. von Gebäuden, Land-, Wasser- und Luftfahrzeugen, oder als Klebstoffe oder Verkittungsmassen, z.B. im Fensterbau oder bei der Herstellung von Vitrinen, sowie z.B. zur Herstellung von Schutzüberzügen, oder das Gleiten verhindernden Überzügen, oder von gummielastischen Formkörpern sowie für die Isolierung von elektrischen oder elektronischen Vorrichtungen.

Die erfindungsgemäßen Massen haben den Vorteil, dass sie leicht herzustellen sind.

Die erfindungsgemäßen Massen haben den Vorteil, dass sie ein ausgezeichnetes Aushärtungsverhalten zeigen.

Des Weiteren haben die erfindungsgemäßen Massen den Vorteil, dass sie sich durch eine sehr hohe Lagerstabilität auszeichnen.

Die erfindungsgemäßen vernetzbaren Massen haben den Vorteil, dass sie nach Vernetzung Formkörper ergeben mit verringertem Modul und sehr guter Haftung.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

Im Folgenden soll der Begriff Normklima 23°C ± 2°C und 50 % ± 5 % relative Luftfeuchtigkeit beim Druck der umgebenden Atmosphäre beinhalten (860 hPa bis 1060 hPa) und einer Luftgeschwindigkeit von kleiner gleich 1 m/s.

### Test 1:

### Bestimmung der Hautbildungszeit

Zur Bestimmung der Hautbildungszeit werden die in den Beispielen erhaltenen vernetzbaren Massen in einer 2 mm dicken Schicht auf PE-Folie aufgetragen und bei Normklima gelagert. Während des Aushärtens wird alle 5 min die Bildung einer Haut getestet. Dazu wird ein trockener und fettfreier Finger vorsichtig auf die Oberfläche der Probe aufgesetzt und nach oben gezogen. Bleibt Probe am Finger kleben, hat sich noch keine Haut gebildet. Bleibt keine Probe am Finger mehr kleben, so hat sich eine Haut gebildet und die Zeit wird notiert.

### Test 2:

### Bestimmung des Moduls

Der Modul ist der Spannungswert bei 100 % Dehnung, gemessen an S2-Prüfkörper nach DIN 53504-85.

### Test 3:

### Beurteilung der Haftung

Die zu prüfenden Untergründe werden von anhaftendem Schmutz gereinigt und glatte Oberflächen mit einem geeigneten Lösungsmittel entfettet. Zur Bestimmung der Haftung werden die in den Beispielen erhaltenen vernetzbaren Massen in einer 2 mm dicken Schicht auf die zu prüfenden Untergründe aufgetragen und sieben Tage bei Normklima gelagert. Zur Testung der Haftung wird ein etwa 1 cm langes Stück des Vulkanisats vom Untergrund abgeschabt und daran in Richtung des noch anhaftenen Gummis bis zum Versagen gezogen. Reißt der Gummi in sich, so ist die Haftung in Ordnung und wird mit 1 bewertet. Lässt sich der Gummi teilweise vom Untergrund abziehen, wird die Haftung mit 3 bewertet. Lässt sich der Gummi ohne Rückstand vom Untergrund abziehen, so ist die Haftung schlecht und wird mit 5 bewertet.

### Beispiel 1 (B1)

### Herstellung von Polymer 1

970 g eines monoolarmen Poly-(propylenglykol)-diols mit einem mittleren Molgewicht von 18 000 g/mol, einer OH-Zahl von 7,0 mg KOH/g, einer Molmassenverteilung Mw/Mn von 1,1 und einer Viskosität von 23 000 mPas (käuflich erhältlich bei Bayer MaterialScience AG, Deutschland unter der Bezeichnung "Acclaim Polyol 18200N"), 30 g 3-Isocyanatopropyl-trimethoxysilan und 0,1 g Bismutoctoat wurden 1 Stunde bei 90°C umgesetzt, anschließend wurde 1 g Methanol zugegeben, um Isocyanatreste abzufangen. Das Reaktionsprodukt wurde auf Raumtemperatur abgekühlt und unter Ausschluss von Feuchtigkeit gelagert.

Es wurde ein klares, farbloses Polymer erhalten, mit einer Viskosität von 35 000 mPas.

225 g des so hergestellten Polymers 1, 3 g Poly-(ethylenglykol)-disäure mit einer mittleren Molmasse von 600 g/mol (käuflich erhältlich bei Sigma-Aldrich Chemie GmbH, Deutschland), 20 g eines micronisierten gehärteten Rizinusöls (käuflich erhältlich unter der Bezeichnung "Luvotix R" bei der Fa. Lehmann & Voss, Deutschland) und 300 g eines gemahlenen natürlichen Marmors mit einer mittleren Teilchengröße von 2 µm, einer Restfeuchte von max. 0,2%, einer BET-Oberfläche von 5 m²/g und einem Calciumcarbonatgehalt von 98,0% (und ca. 1,8% MgCO₃ und 0,2% SiO₂) werden in einem Planetenmischer miteinander gemischt und 15 Minuten bei ca. 100 mbar Absolutdruck gerührt. Die Temperatur nach dem Mischen beträgt ca. 50°C. Anschließend werden 360 g eines Polypropylenglykol-monohydroxy-monobutylethers mit einer Viskosität bei 50°C von 240 mPas und einem Wassergehalt, bestimmt mittels Titration nach Karl-Fischer, von 120 ppm, 2,5 g N-(Dimethoxy)methylsilylmethyl)-O-methylcarbamat (käuflich erhältlich unter der Bezeichnung GENIOSIL^{®} XL 65 bei der Wacker Chemie AG, D-München) und 10 g Vinyltrimethoxysilan (käuflich erhältlich unter der Bezeichnung GENIOSIL^{®} XL 10 bei der Wacker Chemie AG, D-München) zugegeben und weitere 3 Minuten gerührt. Anschließend wird der Ansatz durch homogenes Einmischen von 42 g hydrophober pyrogener Kieselsäure mit einer spezifischen Oberfläche von 200 m²/g (käuflich erhältlich unter der Bezeichnung HDK^{®} H18 bei der Wacker Chemie AG, D-München), 9,0 g 3-Aminopropyl-trimethoxysilan (käuflich erhältlich unter der Bezeichnung GENIOSIL^{®} GF 96 bei der Wacker Chemie AG, D-München), 9,0 g eines flüssigen Stabilisatorgemisches bestehend aus ca. 50% eines sterisch gehinderten Amins, hauptsächlich bestehend aus Bis(1,2,2,6,6-Pentamethyl-4-piperidyl)sebacat und Methyl-1,2,2,6,6-pentamethyl-4-piperidylsebacat, als Radikalfänger, ca. 35% eines UV-Absorbers vom Benzotriazoltyp, hauptsächlich bestehend aus 2-(2H-Benzotriazol-2-yl)4-methyl-6-dodecylphenol und ca. 15% eines sterisch gehinderten Phenols, hauptsächlich bestehend aus C7-C9-verzweigtes Alkyl-[3-(3,5-di-tert-butyl-4-hydroxyphenyl)]propionat als Oxidationsinhibitor (käuflich erhältlich unter der Bezeichnung Tinuvin^{®} B 75 bei der Bodo Möller Chemie GmbH, Deutschland) und 2,5 g Dioctylzinndilaurat (käuflich erhältlich unter der Bezeichnung WACKER^{®} Katalysator C39 bei der Wacker Chemie AG, D-München) vervollständigt. Zum Schluss wird die Mischung 5 Minuten bei ca. 100 mbar Absolutdruck gerührt, luftdicht in eine 310-ml-PE-Kartusche abgefüllt und gelagert.

Nach einem Tag Lagerung bei Raumtemperatur werden Test 1 bis 3 durchgeführt. Die Ergebnisse finden sich in Tabelle 1.

### Beispiel 2 (B2)

Die in Beispiel 1 beschriebene Verfahrensweise wurde wiederholt, mit der Abänderung, dass anstelle von 3 g 6 g Poly-(ethylenglykol)-disäure mit einer mittleren Molmasse von 600 g/mol (käuflich erhältlich bei Sigma-Aldrich Chemie GmbH, Deutschland) eingesetzt wurden.

Nach einem Tag Lagerung bei Raumtemperatur werden Test 1 bis 3 durchgeführt. Die Ergebnisse finden sich in Tabelle 1.

### Beispiel 3 (B3)

Die in Beispiel 1 beschriebene Verfahrensweise wurde wiederholt, mit der Abänderung, dass anstelle von 3 g Poly-(ethylenglykol)-disäure mit einer mittleren Molmasse von 600 g/mol 2 g Poly-(ethylenglykol)-disäure mit einer mittleren Molmasse von 250 g/mol (käuflich erhältlich bei Sigma-Aldrich Chemie GmbH, Deutschland) eingesetzt wurden.

Nach einem Tag Lagerung bei Raumtemperatur werden Test 1 bis 3 durchgeführt. Die Ergebnisse finden sich in Tabelle 1.

### Beispiel 4 (B4)

Die in Beispiel 1 beschriebene Verfahrensweise wurde wiederholt, mit der Abänderung, dass anstelle von 3 g Poly-(ethylenglykol)-disäure mit einer mittleren Molmasse von 600 g/mol 4 g 2-[2-(2-Methoxyethoxy)-ethoxy]essigsäure (käuflich erhältlich bei Sigma-Aldrich Chemie GmbH, Deutschland) eingesetzt wurden.

Nach einem Tag Lagerung bei Raumtemperatur werden Test 1 bis 3 durchgeführt. Die Ergebnisse finden sich in Tabelle 1.

### Beispiel 5 (B5)

Die in Beispiel 1 beschriebene Verfahrensweise wurde wiederholt, mit der Abänderung, dass anstelle von 3 g Poly-(ethylenglykol)-disäure mit einer mittleren Molmasse von 600 g/mol 10,3 g Glykolsäure-ethoxylat-laurylether mit einer mittleren Molmasse von 460 g/mol (käuflich erhältlich bei Sigma-Aldrich Chemie GmbH, Deutschland) eingesetzt wurden.

Nach einem Tag Lagerung bei Raumtemperatur werden Test 1 bis 3 durchgeführt. Die Ergebnisse finden sich in Tabelle 1.

### Vergleichsbeispiel 1 (V1)

Die in Beispiel 1 beschriebene Verfahrensweise wurde wiederholt, mit der Abänderung, dass keine Poly-(ethylenglykol)-disäure mit einer mittleren Molmasse von 600 g/mol eingesetzt wurde.

Nach einem Tag Lagerung bei Raumtemperatur werden Test 1 bis 3 durchgeführt. Die Ergebnisse finden sich in Tabelle 1.

### Vergleichsbeispiel 2 (V2)

Die in Beispiel 1 beschriebene Verfahrensweise wurde wiederholt, mit der Abänderung, dass anstelle von 3 g Poly-(ethylenglykol)-disäure mit einer mittleren Molmasse von 600 g/mol 2 g Neodecansäure (käuflich erhältlich bei ABCR GmbH, Deutschland) eingesetzt wurden.

Nach einem Tag Lagerung bei Raumtemperatur werden Test 1 bis 3 durchgeführt. Die Ergebnisse finden sich in Tabelle 1.

### Vergleichsbeispiel 3 (V3)

Die in Beispiel 1 beschriebene Verfahrensweise wurde wiederholt, mit der Abänderung, dass anstelle von 3 g Poly-(ethylenglykol)-disäure mit einer mittleren Molmasse von 600 g/mol 4 g Neodecansäure (käuflich erhältlich bei ABCR GmbH, Deutschland) eingesetzt wurden.

Nach einem Tag Lagerung bei Raumtemperatur werden Test 1 bis 3 durchgeführt. Die Ergebnisse finden sich in Tabelle 1.

### Vergleichsbeispiel 4 (V4)

Die in Beispiel 1 beschriebene Verfahrensweise wurde wiederholt, mit der Abänderung, dass anstelle von 3 g Poly-(ethylenglykol)-disäure mit einer mittleren Molmasse von 600 g/mol (käuflich erhältlich bei Sigma-Aldrich Chemie GmbH, Deutschland) 4 g Dimersäure, hydriert mit einer mittleren Molmasse von 570 g/mol (käuflich erhältlich bei Sigma-Aldrich Chemie GmbH, Deutschland) eingesetzt wurden.

Nach einem Tag Lagerung bei Raumtemperatur werden Test 1 bis 3 durchgeführt. Die Ergebnisse finden sich in Tabelle 1.

### Vergleichsbeispiel 5 (V5)

Die in Beispiel 1 beschriebene Verfahrensweise wurde wiederholt, mit der Abänderung, dass anstelle von 3 g Poly-(ethylenglykol)-disäure mit einer mittleren Molmasse von 600 g/mol 4 g n-Octansäure (käuflich erhältlich bei Sigma-Aldrich Chemie GmbH, Deutschland) eingesetzt wurden.

Nach einem Tag Lagerung bei Raumtemperatur werden Test 1 bis 3 durchgeführt. Die Ergebnisse finden sich in Tabelle 1.

### Vergleichsbeispiel 6 (V6)

Die in Beispiel 1 beschriebene Verfahrensweise wurde wiederholt, mit der Abänderung, dass anstelle von 3 g Poly-(ethylenglykol)-disäure mit einer mittleren Molmasse von 600 g/mol 1,3g Essigsäure (käuflich erhältlich bei Sigma-Aldrich Chemie GmbH, Deutschland) eingesetzt wurden.

Nach einem Tag Lagerung bei Raumtemperatur werden Test 1 bis 3 durchgeführt. Die Ergebnisse finden sich in Tabelle 1.

### Vergleichsbeispiel 7 (V7)

Die in Beispiel 1 beschriebene Verfahrensweise wurde wiederholt, mit der Abänderung, dass anstelle von 3 g Poly-(ethylenglykol)-disäure mit einer mittleren Molmasse von 600 g/mol 3,4g einer 50 %igen Lösung von Glykolsäure in Methanol (käuflich erhältlich bei Sigma-Aldrich Chemie GmbH, Deutschland) eingesetzt wurden.

Nach einem Tag Lagerung bei Raumtemperatur werden Test 1 bis 3 durchgeführt. Die Ergebnisse finden sich in Tabelle 1.

**Tabelle 1**

| Beispiele | Test 1 [min] | Test 2 [MPa] | Test 3 (Betonhaftung) |
|---|---|---|---|
| B1 | 30 | 0,50 | 1 |
| B2 | 40 | 0,48 | 1 |
| B3 | 25 | 0,52 | 3 |
| B4 | 25 | 0,47 | 1 |
| B5 | 30 | 0,34 | 1 |
| V1 | 30 | 0,54 | 3 |
| V2 | 40 | 0,62 | 1 |
| V3 | >60 | 0,67 | 1 |
| V4 | 40 | 0,54 | 1 |
| V5 | >60 | 0,52 | 1 |
| V6 | 45 | 0,53 | 5 |
| V7 | 50 | 0,54 | 5 |

### Beispiel 6 (B6)

225 g des in Beispiel 1 hergestellten Polymers 1, 3 g Poly-(ethylenglykol)-disäure mit einer mittleren Molmasse von 600 g/mol (käuflich erhältlich bei Sigma-Aldrich Chemie GmbH, Deutschland), 20 g eines micronisierten gehärteten Rizinusöls (käuflich erhältlich unter der Bezeichnung "Luvotix R" bei der Fa. Lehmann &Voss, Deutschland) und 300 g eines gefällten Calciumcarbonates mit einer mittleren Teilchengröße von 0,1 µm (käuflich erhältlich unter der Bezeichnung "Precarb 100" bei der Fa. Schaefer Kalk KG, Deutschland) werden in einem Planetenmischer miteinander gemischt und 15 Minuten bei ca. 100 mbar Absolutdruck gerührt. Die Temperatur nach dem Mischen beträgt ca. 55°C. Anschließend werden 360 g eines Polypropylenglykol-monohydroxy-monobutylethers mit einer Viskosität bei 50°C von 240 mPas und einem Wassergehalt, bestimmt mittels Titration nach Karl-Fischer, von 120 ppm, 2,5 g N-((Dimethoxy)methylsilylmethyl)-O-methylcarbamat (käuflich erhältlich unter der Bezeichnung GENIOSIL^{®} XL 65 bei der Wacker Chemie AG, D-München) und 10 g Vinyltrimethoxysilan (käuflich erhältlich unter der Bezeichnung GENIOSIL^{®} XL 10 bei der Wacker Chemie AG, D-München) zugegeben und weitere 3 Minuten gerührt. Anschließend wird der Ansatz durch homogenes Einmischen von 42g hydrophober pyrogener Kieselsäure mit einer spezifischen Oberfläche von 200 m²/g (käuflich erhältlich unter der Bezeichnung HDK^{®} H18 bei der Wacker Chemie AG, D-München), 9,0 g 3-Aminopropyl-trimethoxysilan (käuflich erhältlich unter der Bezeichnung GENIOSIL^{®} GF 96 bei der Wacker Chemie AG, D-München), 9,0 g eines flüssigen Stabilisatorgemisches bestehend aus ca. 50% eines sterisch gehinderten Amins, hauptsächlich bestehend aus Bis(1,2,2,6,6-Pentamethyl-4-piperidyl)sebacat und Methyl-1,2,2,6,6-pentamethyl-4-piperidylsebacat, als Radikalfänger, ca. 35% eines UV-Absorbers vom Benzotriazoltyp, hauptsächlich bestehend aus 2-(2H-Benzotriazol-2-yl)4-methyl-6-dodecylphenol und ca. 15% eines sterisch gehinderten Phenols, hauptsächlich bestehend aus C7-C9-verzweigtes Alkyl-[3-(3,5-di-tert-butyl-4-hydroxyphenyl)]propionat als Oxidationsinhibitor (käuflich erhältlich unter der Bezeichnung Tinuvin^{®} B 75 bei der Bodo Möller Chemie GmbH, Deutschland) und 2,5 g Dioctylzinndilaurat (käuflich erhältlich unter der Bezeichnung WACKER^{®} Katalysator C39 bei der Wacker Chemie AG, D-München) vervollständigt. Zum Schluss wird die Mischung 5 Minuten bei ca. 100 mbar Absolutdruck gerührt, luftdicht in eine 310-ml-PE-Kartusche abgefüllt und gelagert.

Nach einem Tag Lagerung bei Raumtemperatur werden Test 1 bis 3 durchgeführt. Die Ergebnisse finden sich in Tabelle 2.

### Vergleichsbeispiel 8 (V8)

Die in Beispiel 6 beschriebene Verfahrensweise wurde wiederholt, mit der Abänderung, dass keine Poly-(ethylenglykol)-disäure mit einer mittleren Molmasse von 600 g/mol eingesetzt wurde.

Nach einem Tag Lagerung bei Raumtemperatur werden Test 1 bis 3 durchgeführt. Die Ergebnisse finden sich in Tabelle 2.

### Vergleichsbeispiel 9 (V9)

Die in Beispiel 6 beschriebene Verfahrensweise wurde wiederholt, mit der Abänderung, dass keine Poly-(ethylenglykol)-disäure mit einer mittleren Molmasse von 600 g/mol eingesetzt wurde und anstelle des gefällten Calciumcarbonates mit einer mittleren Teilchengröße von 0,1 µm ein gefälltes und anschließend mit Stearinsäure beschichtetes Calciumcarbonat mit einer mittleren Teilchengröße von 0,08 µm (käuflich erhältlich unter der Bezeichnung Hakuenka CCR bei der Firma Shiraishi Kogyo Kaisha, LTD., Japan) eingesetzt wurde.

Nach einem Tag Lagerung bei Raumtemperatur werden Test 1 bis 3 durchgeführt. Die Ergebnisse finden sich in Tabelle 2.

### Vergleichsbeispiel 10 (V10)

Die in Vergleichsbeispiel 9 beschriebene Verfahrensweise wurde wiederholt, mit der Abänderung, dass zusätzlich 3 g Poly-(ethylenglykol)-disäure mit einer mittleren Molmasse von 600 g/mol eingesetzt wurden.

Nach einem Tag Lagerung bei Raumtemperatur werden Test 1 bis 3 durchgeführt. Die Ergebnisse finden sich in Tabelle 2.

**Tabelle 2**

| Beispiele | Test 1 [min] | Test 2 [MPa] | Test 3 (Betonhaftung) |
|---|---|---|---|
| B6 | 30 | 0,67 | 1 |
| V8 | 40 | 0,71 | 1 |
| V9 | 30 | 0,53 | 5 |
| V10 | 40 | 0,54 | 5 |

### Beispiel 7 (B7)

350 g eines alpha, omega-Dihydroxypolydimethylsiloxans mit einer Viskosität von 80 000 mPas, 200 g eines alpha,omega-Bis-(Trimethylsiloxy)polydimethylsiloxans mit einer Viskosität von 1 000 mPas und 3 g 2-[2-(2-Methoxyethoxy)-ethoxy]essigsäure (käuflich erhältlich bei Sigma-Aldrich Chemie GmbH, Deutschland) werden 3 min in einem Planetendissolver miteinander gemischt. Anschließend wurden 616 g eines gemahlenen natürlichen Marmors mit einer mittleren Teilchengröße von 2 µm, einer Restfeuchte von max. 0,2%, einer BET-Oberfläche von 5 g/m² und einem Calciumcarbonatgehalt von 98,0% (und ca. 1,8% MgCO₃ und 0,2% SiO₂) zugegeben und 5 Minuten eingerührt. Danach wurden 15,0 g 4-(Triethoxysilylmethyl)tetrahydro-1,4-oxazin, 15 g Vinyltriethoxysilan, 12,0 g einer Mischung aus 1 Gew.-Teil Methyltriethoxysilan-Hydrolysat-Oligomeren mit durchschnittlich 10 Si-Atomen pro Molekül und 1 Gew.-Teil 3-Aminopropyltriethoxysilan, 12,0 g 1,3,5-Tris(3-trimethoxysilylpropyl)isocyanurat und 8,0 g 3-Glycidoxypropyltrimethoxysilan zugegeben und 30 Minuten gemischt. Anschließend wird der Ansatz durch homogenes Einmischen von 36 g hydrophile pyrogene Kieselsäure mit einer BET-Oberfläche von 150 m²/g zugegeben (käuflich erhältlich unter der Bezeichnung HDK^{®} V15A bei der Wacker Chemie AG, D-München), 1,76 g Dioctylzinnoxid in Tetraisopropoxysilan (erhältlich unter der Bezeichung "TK 217" bei der TIB Chemikals AG, D-Mannheim) und 4,0 g einer 50 Gew.-%igen Lösung von Octylphosphonsäure in Methyltrimethoxysilan vervollständigt. Zum Entgasen der Mischung wurde ein Unterdruck von ca. 200 hPa angelegt und nochmals 5 Minuten gemischt. Danach wurde die fertige Mischung in handelsübliche Polyethylenkartuschen abgefüllt.

Die Kennwerte dieser Mischung wurden analog Beispiel 1 ermittelt und sind in Tabelle 3 zusammengestellt.

### Vergleichsbeispiel 11 (V11)

Die in Beispiel 7 beschriebene Verfahrensweise wurde wiederholt, mit der Abänderung, dass keine 2-[2-(2-Methoxyethoxy)-ethoxy]essigsäure eingesetzt wurde.

Nach einem Tag Lagerung bei Raumtemperatur werden Test 1 bis 3 durchgeführt. Die Ergebnisse finden sich in Tabelle 3.

### Beispiel 8 (B8)

430 g eines Polydimethylsiloxangemischs, bei denen die Siloxane mit Dimethoxymethylsilyl- und Dimethoxyvinylsilylgruppen terminiert sind und das Verhältnis von Dimethoxymethylsilyl-Endgruppen zu Dimethoxyvinylsilyl-Endgruppen in etwa 1:1 ist, mit einer Viskosität von 80 000 mPas, 100 g eines trimethylsilylendblockierten Polydimethylsiloxans mit einer Viskosität von 1000 mPas und 3,0 g 2-[2-(2-Methoxyethoxy)-ethoxy]essigsäure (käuflich erhältlich bei Sigma-Aldrich Chemie GmbH, Deutschland). werden 3 min in einem Planetendissolver miteinander gemischt. Anschließend wurde 400 g eines gemahlenen natürlichen Marmors mit einer mittleren Teilchengröße von 2 µm, einer Restfeuchte von max. 0,2%, einer BET-Oberfläche von 5 g/m² und einem Calciumcarbonatgehalt von 98,0% zugegeben und 5 Minuten eingerührt. Anschließend wird der Ansatz durch homogenes Einmischen von 12,0 g Diisobutoxy-bis-ethylacetoacetato-titan (käuflich erhältlich unter der Bezeichnung TYZOR^{®} IBAY bei der Fa. Du-Pont^{™}), 4,0 g Methyltrimethoxysilan, 2,0 g eines Polyethylenglykolpolypropylenglykol-block-copolymers mit einer Viskosität von 700 mPas und 50 g pyrogener Kieselsäure mit einer spezifischen Oberfläche von 150 m²/g (käuflich erhältlich unter der Bezeichnung HDK^{®} V15 der Wacker Chemie AG) vervollständigt.

Zum Schluss wird die Mischung 5 Minuten bei ca. 100 mbar Absolutdruck gerührt, und luftdicht abgefüllt und gelagert.

Die Kennwerte dieser Mischung wurden analog Beispiel 1 ermittelt und sind in Tabelle 3 zusammengestellt.

### Vergleichsbeispiel (V12)

Die in Beispiel 8 beschriebene Verfahrensweise wurde wiederholt, mit der Abänderung, dass keine 2-[2-(2-Methoxyethoxy)-ethoxy]essigsäure eingesetzt wurde.

Nach einem Tag Lagerung bei Raumtemperatur werden Test 1 bis 3 durchgeführt. Die Ergebnisse finden sich in Tabelle 3.

**Tabelle 3**

| Beispiele | Test 1 [min] | Test 2 [MPa] | Test 3 (Betonhaftung) |
|---|---|---|---|
| B7 | 15 | 0,70 | 1 |
| V11 | 15 | 0,82 | 1 |
| B8 | 25 | 0,48 | 3 |
| V12 | 20 | 0,52 | 5 |

## Patentansprüche

1. Vernetzbare Massen enthaltend
(A) mindestens eine vernetzungsfähige Verbindung ausgewählt aus der Gruppe bestehend aus Verbindungen (A1) der Formel
A-[(CR¹₂)_{b}-SiRₐ(OR²)₃₋ₐ]ₓ (II),
wobei
A einen x-wertigen, über Stickstoff, Phosphor, Sauerstoff, Schwefel, Kohlenstoff oder Carbonylgruppe gebundenen Polymerrest bedeutet,
R gleich oder verschieden sein kann und einen einwertigen, gegebenenfalls substituierten Kohlenwasserstoffrest darstellt,
R¹ gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
R² gleich oder verschieden sein kann und Wasserstoffatom oder einen einwertigen, gegebenenfalls substituierten Köhlenwasserstoffrest darstellt,
x eine ganze Zahl von 1 bis 10 ist,
a 0, 1 oder 2 ist und
b eine ganze Zahl von 1 bis 10 ist,
mit der Maßgabe, dass pro Molekül mindestens zwei Gruppen OR² anwesend sind,
und
Verbindungen (A2) der Formel
R⁵_{c}Z_{d}SiO_{(4-c-d)/2} (III),
wobei
R⁵ gleich oder verschieden sein kann und gegebenenfalls substituierte Kohlenwasserstoffreste, die durch Sauerstoffatome unterbrochen sein können, bedeutet,
Z gleich oder verschieden sein kann und Hydroxylrest oder hydrolysierbare Reste bedeutet,
c 0, 1, 2 der 3 ist und
d 0, 1, 2 oder 3 ist,
mit der Maßgabe, dass die Summe aus c+d kleiner oder gleich 4 ist und pro Molekül mindestens zwei Reste Z anwesend sind, handelt, und
(B) mit Carbonsäuren (C) der Formel
R⁴-(OCR³₂-C(=O)OH)_{y} (I)
oberflächenbehandelten Calciumcarbonat haltigen Füllstoff (B0), wobei
R³ gleich oder verschieden sein kann und Wasserstoffatom oder einen einwertigen, gegebenenfalls substituierten Kohlenwässerstoffrest darstellt,
R⁴ einen y-wertigen, über Kohlenstoff gebundenen, gegebenenfalls substituierten Kohlenwasserstoffrest, der durch Sauerstoffatome unterbrochen sein kann, bedeutet und
y eine ganze Zahl von 1 bis 3 ist.

2. Vernetzbare Massen gemäß Anspruch 1 **dadurch gekennzeichnet, dass** es sich bei den Calciumcarbonat haltigen Füllstoffen (B0) um gemahlenen natürlichen Kalkstein mit einem Calciumcarbonatgehalt von über 85 Gew.-%, natürlichen Marmor mit einem Calciumcarbonatgehalt von über 85 Gew.-% und gefälltes Calciumcarbonat mit einem Calciumcarbonatgehalt von über 95 Gew.-% handelt.

3. Vernetzbare Massen gemäß einem oder mehreren der Anspruch 1 oder 2, **dadurch gekennzeichnet, dass** es sich bei den Carbonsäuren (C) um 3,6-Dioxaheptansäure, 3,6,9-Trioxadecansäure, 3,6-Dioxaoctandisäure, 3,6,9-Trioxaundecandisäure, Poly-(ethylenglykol)-disäure mit einer Molmasse von ca. 600 g/mol, Glykolsäure-ethoxylat-4-tert.-butylphenylether mit einer mittleren Molmasse von ca. 380 g/mol und Glykolsäure-ethoxylat-laurylether mit einer mittleren Molmasse von ca. 360 g/mol oder ca. 460 g/mol handelt.

4. Vernetzbare Massen gemäß einem oder mehreren der Ansprüche 1 bis 3, **dadurch gekennzeichnet, dass** die erfindungsgemäßen Massen Komponente (B) in Mengen von 5 bis 300 Gewichtsteilen, bezogen auf 100 Gewichtsteile Komponente (A), enthalten.

5. Vernetzbare Massen gemäß einem oder mehreren der Ansprüche 1 bis 4, **dadurch gekennzeichnet, dass** es sich um solche handelt enthaltend
(A) mindestens eine vernetzungsfähige Verbindung
(B) mit Carbonsäuren (C) der Formel (I) oberflächenbehandelte Calciumcarbonat haltige Füllstoffe (B0),
gegebenenfalls
(D) Katalysator,
gegebenenfalls
(E) Vernetzer,
gegebenenfalls
(F) Weichmacher,
gegebenenfalls
(G) Füllstoffe,
gegebenenfalls
(H) Haftvermittler,
gegebenenfalls
(I) Additive und
gegebenefalls
(L) organisches Lösungsmittel.

6. Verfahren zur Herstellung der vernetzbaren Massen gemäß einem oder mehreren der Ansprüche 1 bis 5, **dadurch gekennzeichnet, dass** oberflächenbehandelte Calciumcarbonat haltige Füllstoff (B) mit den übrigen Bestandteilen (A) sowie gegebenenfalls (D) bis (L) in beliebiger Reihenfolge vermischt wird.

7. Verfahren zur Herstellung der vernetzbaren Massen gemäß einem oder mehreren der Ansprüche 1 bis 5, **dadurch gekennzeichnet, dass** der unbehandelte Calciumcarbonat haltige Füllstoff (B0) mit Carbonsäure (C) sowie den übrigen Bestandteilen (A) und gegebenenfalls (D) bis (L) in beliebiger Reihenfolge vermischt werden, so dass die Beschichtung von Füllstoff (B0) mit Komponente (C) in situ erfolgt.

8. Formkörper, hergestellt durch Vernetzung der vernetzbaren Massen gemäß einem oder mehreren der Ansprüche 1 bis 5.

## Claims

1. Crosslinkable compositions comprising
(A) at least one crosslinkable compound selected from the group consisting of compounds (A1) of the formula
A- [(CR¹₂)_{b}-SiRₐ(OR²)₃₋ₐ]ₓ (II)
where
A is an x-valent polymer radical bonded via nitrogen, phosphorus, oxygen, sulfur, carbon or a carbonyl group,
R may be identical or different and is a monovalent, optionally substituted hydrocarbyl radical,
R¹ may be identical or different and is a hydrogen atom or a monovalent, optionally substituted hydrocarbyl radical which may be attached to the carbon atom via nitrogen, phosphorus, oxygen, sulfur or a carbonyl group,
R² may be identical or different and is a hydrogen atom or a monovalent, optionally substituted hydrocarbyl radical,
x is an integer from 1 to 10,
a is 0, 1 or 2 and
b is an integer from 1 to 10,
with the proviso that at least two OR² groups per molecule are present,
and
compounds (A2) of the formula
R⁵_{c}Z_{d}SiO_{(4-c-d)/2} (III)
where
R⁵ may be identical or different and each is an optionally substituted hydrocarbyl radical which may be interrupted by oxygen atoms,
Z may be identical or different and is a hydroxyl radical or hydrolyzable radicals,
c is 0, 1, 2 or 3 and
d is 0, 1, 2 or 3,
with the proviso that the sum of c+d is less than or equal to 4 and at least two Z radicals are present per molecule, and
(B) calcium carbonate-containing filler (B0) surface-treated with carboxylic acids (C) of the formula
R⁴-(OCR³₂-C(=O)OH)_{y} (I)
where
R³ may be identical or different and is a hydrogen atom or a monovalent, optionally substituted hydrocarbyl radical,
R⁴ is a y-valent, carbon-bonded, optionally substituted hydrocarbyl radical which may be interrupted by oxygen atoms, and
y is an integer from 1 to 3.

2. Crosslinkable compositions according to Claim 1, **characterized in that** the calcium carbonate-containing fillers (B0) comprise ground natural limestone with a calcium carbonate content of more than 85% by weight, natural marble with a calcium carbonate content of more than 85% by weight and precipitated calcium carbonate with a calcium carbonate content of more than 95% by weight.

3. Crosslinkable compositions according to one or more of Claims 1 and 2, **characterized in that** the carboxylic acids (C) are 3,6-dioxaheptanoic acid, 3,6,9-trioxadecanoic acid, 3,6-dioxaoctanedioic acid, 3,6,9-trioxaundecanedioic acid, poly(ethylene glycol) diacid with a molar mass of approx. 600 g/mol, glycolic acid ethoxylate 4-tert-butylphenyl ether with a mean molar mass of approx. 380 g/mol and glycolic acid ethoxylate lauryl ether with a mean molar mass of approx. 360 g/mol or approx. 460 g/mol.

4. Crosslinkable compositions according to one or more of Claims 1 to 3, **characterized in that** the inventive compositions contain component (B) in amounts of 5 to 300 parts by weight, based on 100 parts by weight of component (A).

5. Crosslinkable compositions according to one or more of Claims 1 to 4, **characterized in that** they are those comprising
(A) at least one crosslinkable compound,
(B) calcium carbonate-containing fillers (B0) surface-treated with carboxylic acids (C) of the formula (I),
optionally
(D) catalyst,
optionally
(E) crosslinker,
optionally
(F) plasticizer,
optionally
(G) fillers,
optionally
(H) adhesion promoter,
optionally
(I) additives and
optionally
(L) organic solvent.

6. Process for producing the crosslinkable compositions according to one or more of Claims 1 to 5, **characterized in that** filler (B) containing surface-treated calcium carbonate is mixed with the other constituents (A) and optionally (D) to (L) in any sequence.

7. Process for producing the crosslinkable compositions according to one or more of Claims 1 to 5, **characterized in that** the untreated calcium carbonate-containing filler (B0) is mixed with carboxylic acid (C) and the other constituents (A) and optionally (D) to (L) in any sequence, such that filler (B0) is coated with component (C) in situ.

8. Shaped body produced by crosslinking the crosslinkable compositions according to one or more of Claims 1 to 5.

## Revendications

1. Matières réticulables, contenant
(A) au moins un composé apte à la réticulation, choisi dans le groupe constitué par des composés (A1) de formule
A- [(CR¹₂)_{b}-SiRₐ(OR²)₃₋ₐ]ₓ (II),
dans laquelle
A représente un radical polymère x-valent lié par un atome d'azote, de phosphore, d'oxygène, de soufre, de carbone ou par un groupe carbonyle,
R peut être le même ou différent et représente un radical hydrocarboné monovalent, éventuellement substitué,
R¹ peut être le même ou différent et représente un atome d'hydrogène ou un radical hydrocarboné monovalent, éventuellement substitué, qui peut être lié à l'atome de carbone par un atome d'azote, de phosphore, d'oxygène, de soufre ou par un groupe carbonyle,
R² peut être le même ou différent et représente un atome d'hydrogène ou un radical hydrocarboné monovalent, éventuellement substitué,
x est un nombre entier valant de 1 à 10,
a est 0, 1 ou 2 et
b est un nombre entier valant de 1 à 10,
étant entendu qu'au moins deux groupes OR² sont présents par molécule,
et
des composés (A2) de formule
R⁵_{c}Z_{d}SiO_{(4-c-d)/2} (III),
dans laquelle
R⁵ peut être le même ou différent et représente des radicaux hydrocarbonés éventuellement substitués, qui peuvent être interrompus par des atomes d'oxygène,
Z peut être le même ou différent et représente un radical hydroxy ou des radicaux hydrolysables,
c est 0, 1, 2 ou 3 et
d est 0, 1, 2 ou 3,
étant entendu que la somme de c+d est inférieure ou égale à 4 et qu'au moins deux radicaux Z sont présents par molécule, et
(B) une charge (B0) contenant du carbonate de calcium, traitée en surface par des acides carboxyliques (C) de formule
R⁴- (OCR³₂-C(=O)OH)_{y} (I)
dans laquelle
R³ peut être le même ou différent et représente un atome d'hydrogène ou un radical hydrocarboné monovalent, éventuellement substitué,
R⁴ représente un radical hydrocarboné y-valent, éventuellement substitué, lié par un atome de carbone, qui peut être interrompu par des atomes d'oxygène, et
y est un nombre entier valant de 1 à 3.

2. Matières réticulables selon la revendication 1, **caractérisées en ce que** les charges (B0) contenant du carbonate de calcium consistent en du calcaire naturel broyé ayant une teneur en carbonate de calcium de plus de 85 % en poids, du marbre naturel ayant une teneur en carbonate de calcium de plus de 85 % en poids et du carbonate de calcium précipité ayant une teneur en carbonate de calcium de plus de 95 % en poids.

3. Matières réticulables selon une ou plusieurs des revendications 1 et 2, **caractérisées en ce que** les acides carboxyliques (C) consistent en acide 3,6-dioxaheptanoïque, acide 3,6,9-trioxadécanoïque, acide 3,6-dioxaoctanedioïque, acide 3,6,9-trioxa-undécanedioïque, acide poly-(éthylèneglycol)-dioïque ayant une masse moléculaire d'environ 600 g/mole, éther 4-tert.-butylphénylique-éthoxylate d'acide glycolique ayant une masse moléculaire moyenne d'environ 380 g/mole et éther laurylique-éthoxylate d'acide glycolique ayant une masse moléculaire moyenne d'environ 360 g/mole ou d'environ 460 g/mole.

4. Matières réticulables selon une ou plusieurs des revendications 1 à 3, **caractérisées en ce que** les matières selon l'invention contiennent le composant (B) en quantités de 5 à 300 parties en poids, par rapport à 100 parties en poids du composant (A).

5. Matières réticulables selon une ou plusieurs des revendications 1 à 4, **caractérisées en ce qu'**il s'agit de celles contenant
(A) au moins un composé apte à la réticulation
(B) des charges (B0) contenant du carbonate de calcium, traitées en surface par des acides carboxyliques (C) de formule (I),
éventuellement
(D) un catalyseur,
éventuellement
(E) un agent de réticulation,
éventuellement
(F) des plastifiants,
éventuellement
(G) des charges,
éventuellement
(H) des promoteurs d'adhérence,
éventuellement
(I) des additifs et
éventuellement
(L) un solvant organique.

6. Procédé pour la production des matières réticulables selon une ou plusieurs des revendications 1 à 5, **caractérisé en ce qu'**on mélange la charge (B) contenant du carbonate de calcium, traitée en surface, avec les autres composants (A) ainsi qu'éventuellement (D) à (L), en un ordre quelconque.

7. Procédé pour la production des matières réticulables selon une ou plusieurs des revendications 1 à 5, **caractérisé en ce qu'**on mélange la charge (B0) contenant du carbonate de calcium, non traitée, avec de l'acide carboxylique (C) ainsi que les autres composants (A) et éventuellement (D) à (L), en un ordre quelconque, de sorte que l'enrobage de la charge (B0) avec le composant (C) s'effectue in situ.

8. Corps moulé, produit par réticulation des matières réticulables selon une ou plusieurs des revendications 1 à 5.
